(19) Europäisches Patentamt
European Patent Office
Office européen des brevets

(11) EP 1 636 027 B1

(12) **EUROPEAN PATENT SPECIFICATION**

(45) Date of publication and mention of the grant of the patent:
**09.01.2013 Bulletin 2013/02**

(21) Application number: **04776705.8**

(22) Date of filing: **16.06.2004**

(51) Int Cl.:
***B32B 27/12*** *(2006.01)*

(86) International application number:
**PCT/US2004/019359**

(87) International publication number:
**WO 2004/113070 (29.12.2004 Gazette 2004/53)**

# (54) WATERPROOF AND HIGH MOISTURE VAPOR PERMEABLE FABRIC LAMINATE

WASSERDICHTES UND WASSERDAMPFHOCHDURCHLÄSSIGES TEXTILSTOFFLAMINAT

LAMELLE DE TISSU ETANCHE A L'EAU, HAUTEMENT PERMEABLE A LA VAPEUR HUMIDE

(84) Designated Contracting States:
**AT BE BG CH CY CZ DE DK EE ES FI FR GB GR HU IE IT LI LU MC NL PL PT RO SE SI SK TR**

(30) Priority: **20.06.2003 US 818214**

(43) Date of publication of application:
**22.03.2006 Bulletin 2006/12**

(73) Proprietor: **Gore Enterprise Holdings, Inc.**
**Newark, DE 19714-9206 (US)**

(72) Inventors:
- **JAIN, Mukesh, K.**
**Newark, DE 19702 (US)**
- **WU, Huey, Shen**
**Newark, DE 19711 (US)**

(74) Representative: **Shanks, Andrew et al**
**Marks & Clerk LLP**
**Aurora**
**120 Bothwell Street**
**Glasgow**
**G2 7JS (GB)**

(56) References cited:
**US-A- 4 515 761**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF INVENTION

This invention relates to fabric laminates with sulfonated aromatic polymers wherein the fabrics are waterproof and have a high moisture vapor permeation rate at various humidity conditions.

BACKGROUND OF THE INVENTION

Waterproof and moisture vapor permeable fabrics have been known in the art for many years, an example of which comprises an expanded microporous polytetrafluoroethylene (ePTFE) membrane. Other fabrics use polyether-polyurethane materials or polyether-polyester materials for achieving similar goals. These polyether-polyurethane or polyether-polyester materials can be made into microporous membranes or monolithic continuous membranes. For microporous membranes, usually moisture vapor permeability is very high and almost independent of relative humidity; however, the membranes can be contaminated by body sweat or detergents and waterproofness can be lost. On the other hand, for monolithic continuous membranes, moisture vapor permeability is limited by the polyether chemistry, which usually only allows high moisture vapor permeabilities at very high relative humidity greater than about 85%. Human skin will begin to feel uncomfortable at a relative humidity of greater than about 75%. It is therefore very desirable to develop new fabrics that can afford very high moisture vapor permeability at both low and high relative humidity while still providing waterproofness.

U.S. Patent No. 4,194,041, to Gore et al. discloses a waterproof article that prevents liquid water from penetrating through to undergarments while at the same time permitting moisture vapor such as perspiration to pass through the article. A continuous hydrophilic layer is attached to the inner face of a layer of hydrophobic material to help prevent contamination by dirt and body oils in order to maintain waterproofness. The hydrophobic layer may be a porous polytetrafluoroethylene membrane, and the hydrophilic layer is an aliphatic polymer selected from polyether-polyurethane and a perfluorosulphonic acid membrane.

U.S. Patent Nos. 4,515,761 and 4,518,650 teach the use of an aliphatic fluorinated ion exchange polymer in protective clothing. However, the fluorinated ion exchange materials are very expensive and therefore prohibitive for use in apparel applications. Further, hydrophilic aliphatic structures may lack durability against washing because of limited wet strength, may be more susceptible to contamination by body oils compared to other compounds, and additionally may degrade upon extended exposure to high temperatures and/or flames.

In industrial and recreational uses, it is known, for example, that waterproofness, moisture vapor transmission, and contamination resistance to body oils are necessary in garments to provide protection from rain and to provide comfort during high levels of activity at extreme environmental conditions. Furthermore, for fire fighting applications, thermal stability, wet strength, and contamination resistance is also needed. For applications such as mountaineering, backpacking, and skiing, ultra violet (UV) radiation stability is also necessary, while sailing requires garments that have high wet strength.

Therefore, a polymer that is both inexpensive for use in apparel applications, and among other things is durable against washing, having greater wet strength than polymers currently known for use in apparel applications, and that also has a greater resistance to contamination by body oils, would be advantageous. It is known that engineering thermoplastic polymers have high thermal stability, good mechanical properties, high glass transition temperatures and exceptional resistance to hydrolysis and oxidation (Encyclopedia of Polymer Science and Engineering, John Wiley and Sons, New York, NY; Modern Plastics Encyclopedia, McGraw Hill, Hightstown, NJ). These materials generally produce films that are both tough and ductile, and have properties that render them desirable for use in a diverse set of applications including adhesives, films and coatings for the automotive and electronic industries. Representative engineering thermoplastic polymers include polyesters, polyamides, polyacrylates, poly(acrylene ethers), poly(acrylene sulfones), polyimides, and polyetherimides. In many instances, engineering thermoplastic polymers contain aromatic rings as substituents or as part of the main polymer backbone which can be readily substituted or modified to impart additional functionality for specific applications.

Polymers having aromatic groups incorporated in the polymer backbone are known to exhibit a high degree of thermal and chemical stability (Heat Resistant Polymers - Technologically Useful Materials, Critchley et al., 1983, Plenum Press, New York, NY). Moreover, when compared to certain aliphatic polymers, aromatic backbone polymers (hereinafter referred to as "aromatic polymers") have greater mechanical strength and maintain their properties to a greater extent after exposure to common chemicals and environmental contaminants such as fuels, lubricants, and body oils. Additionally, these aromatic polymers exhibit low permeation to water vapor. One approach to imparting hydrophilicity to these polymers, and thereby facilitating the transmission of water vapor, is to sulfonate the aromatic rings. U.S. Patent Nos. 5,013,765 and 5,362,836 teach methods to prepare sulfonated aromatic polymers for use in ultrafiltration, desalting and removal of microorganisms, and in ion exchange membranes for electrolysis cells. U.S. Patent Nos. 5,403,675 and

6,509,441 teach methods to prepare sulfonated aromatic polymer membranes for application in fuel cells. International Publication No. WO 01/19896 A1 teaches a composite membrane for use as an ion-exchange membrane made of a sulfonated ion conductive polymer and a support material. Applications mentioned include electrochemical fuel cells, ion exhange material for chromatographic separations, gas separation and pervaporation among others.

U.S. Patent No. 4,824,916 teaches the use of highly sulfonated polyamide and polyurea materials. The polymers are water-soluble for use as thickeners, exhibit resistance to shear degradation and have 'desirable' rheological properties. Membranes can be prepared by casting a highly sulfonated polyamide or polyurea water soluble polymer film on a porous support followed by crosslinking. When crosslinked, it is taught that the polymers can be rendered substantially water-insoluble for use as water absorbents and as membranes for pervaporation, gas separation and solvent dehydration. In addition, the patent mentions water permeable garments as a potential use of these materials. However, because of the high degree of sulfonation, these membranes are not expected to have a high level of durability in a garment application, and upon washing, water may leak easily through the membrane.

Thus, there is a need for fabric laminates that do not have limitations inherent in current approaches.

## SUMMARY OF THE INVENTION

This invention is directed to a fabric laminate capable of transmitting high amounts of moisture vapor that has greater mechanical strength, more durability to washing, and that is ecomonical to manufacture. The waterproof, breathable fabric laminate of the present invention comprises at least one layer of apparel fabric and a layer comprising at least a sulfonated aromatic polymer.

It has been discovered that certain sulfonated aromatic polymers can provide high moisture vapor permeation and enhanced mechanical properties (in both dry and wet state). The amount of sulfonation in these polymers should be carefully controlled, since a high degree of sulfonation can produce sulfonated aromatic polymers that swell excessively in presence of water. Severe swelling can lead to a loss of mechanical strength or even result in the dissolution of the polymer in water. Conversely, insufficient sulfonation imparts inadequate hydrophilicity to facilitate significant water vapor transmission. The amount of sulfonic acid groups in the polymer may be determined by titration with a base. This is also referred to as ion exchange capacity (IEC) of the sulfonated polymer. A higher IEC indicates a higher degree of sulfonation. A detailed procedure for determination of IEC is included under test methods. Another measure of the degree of sulfonation is equivalent weight which is 1000/IEC. A higher equivalent weight indicates lower degree of sulfonation.

It has been found that certain aromatic polymers having specific amounts of sulfonation are useful in waterproof, breathable apparel applications by providing high moisture vapor permeation. It has further been found that fabric laminates formed from sulfonated aromatic polymers may provide articles of apparel that are inexpensive, more durable to washing, resistant to contamination by body oils, and that have greater thermal stability and heat resistance.

The sulfonated aromatic polymer comprises at least one repeating aromatic group selected from 5, 6,or 7 membered single or fused rings having 0, 1, 2, 3, or 4 hetero-atoms selected from N, O or S, and at least a portion of the aromatic groups have at least one pendant group comprising sulfonic acid, or its salt. The sulfonated aromatic polymer preferably has a sulfonic acid equivalent weight of about 400 - 1000 (IEC: 1.0 - 2.5 meq/g) and the layer comprising the sulfonated aromatic polymer is laminated to at least one layer of apparel fabric. Aromatic groups may be linked by one or more linkages comprising ketone, sulfone, ether, sulfide, urethane, amide, imide, and ester groups, and substituted or unsubstituted saturated or unsaturated $C_1$-$_5$ alkylene groups, substituted or unsubstituted phosphine groups, and phosphine oxide groups, wherein the substituents include halogens, such as fluorine and chlorine, aryl, $C_{1-5}$ alkyl, and $C_{1-5}$ haloalkyl.

Another aspect of this invention further discloses a fabric laminate capable of transmitting moisture vapor comprising at least one layer of fabric, and a composite comprising at least one substrate selected from porous or microporous polypropylene, polysufone, polyurethane, and expanded polytetrafluoroethylene (ePTFE), and a sulfonated aromatic polymer as described above. In the case of a composite where the substrate is ePTFE, for example, the sulfonated aromatic polymer may be a layer distinct from the ePTFE membrane or may be partially or fully impregnated into the expanded PTFE membrane.

A further aspect of the present invention is an article of apparel comprising a fabric laminate capable of transmitting moisture vapor which is durable against washing, and has high contamination resistance to dirt and body oils. The fabric laminate of the present invention is formed as an article of apparel or enclosure, including garments such as outer wear, under wear, jackets, top, shirts, pants, gloves, foot wear, hoods, and may further include tents, sleeping bags, casualty bags, shelters, and the like.

## DETAILED DESCRIPTION OF THE FIGURES

Fig. 1 shows an example of a film of a sulfonated aromatic polymer.

Fig. 2 shows an example of a fabric laminate with a layer of apparel fabric in contact with a layer of sulfonated aromatic polymer.

Fig. 3 shows an example of a fabric laminate with two layers of apparel fabric and a sulfonated aromatic polymer that partially resides within a portion of each of the apparel fabric layers.

Fig. 4 shows an example of a composite of a non-porous substrate and a sulfonated aromatic polymer.

Fig. 5 shows an example of a composite of a closed pore substrate and a sulfonated aromatic polymer.

Fig. 6 shows an example of a composite of an open pore substrate and a sulfonated aromatic polymer.

Fig. 7 shows another example of a composite of a sulfonated aromatic polymer on a porous substrate.

Fig. 8 shows an example of a composite of a sulfonated aromatic polymer and a porous substrate wherein a portion of the polymer resides within the porous substrate.

Fig. 9 shows another example of a sulfonated aromatic polymer and a porous substrate wherein a portion of the polymer resides within the porous substrate.

Fig. 10 shows an example of a composite of a sulfonated aromatic polymer and a porous substrate wherein essentially all of the polymer resides within a portion of the porous substrate.

Fig. 11 shows another example of a composite of a sulfonated aromatic polymer and a porous substrate wherein essentially all of the polymer resides within a portion of the porous substrate.

Fig. 12 shows an example of a composite of a sulfonated aromatic polymer residing within a porous substrate and substatially filling said porous substrate.

Fig. 13 shows an example of a composite of a sulfonated aromatic polymer and a porous substrate wherein a portion of the sulfonated aromatic polymer resides within and substantially fills the porous substrate.

Fig. 14 shows an example of a composite of a sulfonated aromatic polymer and a porous substrate wherein a portion of the sulfonated aromatic polymer resides and substantially fills the porous substrate.

Fig. 15 shows an example of a composite having a sulfonated aromatic polymer between two porous substrates, wherein essentially all of the polymer resides within the substrates.

Fig. 16 shows an example of a composite having a sulfonated aromatic polymer between two porous substrates wherein portions of the polymer reside within each substrate.

Fig. 17 shows an example of a composite of a non-porous substrate, a sulfonated aromatic polymer and a porous substrate, wherein the sulfonated aromatic polymer resides within a portion of the porous substrate.

Fig. 18 shows an example of a composite having a sulfonated aromatic polymer between a porous substrate and a non-porous substrate, wherein a portion of the sulfonated aromatic polymer resides within a portion of the porous substrate.

Fig. 19 shows an example of a composite of a sulfonated aromatic polymer, a non-porous substrate and two open pore substrates wherein portions of the aromatic polymer and non porous substrate resides within one of the porous substrates.

Fig. 20 shows an example of a composite of a sulfonated aromatic polymer, a non-porous substrate and two open pore substrates wherein portions or the sulfonated aromatic polymer resides within each of the porous substrates and portions of the non porous substrate resides within one of the porous substrates.

Fig. 21 shows an example of a of a multi-layered fabric laminate having two apparel fabric layers and a composite of a sulfonated aromatic polymer between two porous substrates and residing within a portion of the substrates, wherein the porous layers are adhered to the apparel fabric layers by discontinuously applied adhesive.

## DETAILED DESCRIPTION OF THE INVENTION

The present invention is directed to a waterproof fabric laminate capable of transmitting a high amount of moisture vapor, providing needed comfort and protection for wearers. The moisture vapor transmission rate (MVTR) of the fabric laminate is at least about 600 $g/m^2/day$, preferably greater than or equal to about 1000 $g/m^2/day$, and more preferably greater than or equal to about 2000 $g/m^2/day$, as measured by the method described under "Test Methods".

The fabric laminate comprises a layer comprising at least a sulfonated aromatic polymer and at least one layer of apparel fabric. By apparel fabric it is meant a fabric that is sufficiently flexible, pliable and durable for use in garments, tents, sleeping bags and the like. Apparel fabric includes knit, woven or non-woven fabrics comprising synthetic or natural fibers of polymers selected from poly(aliphatic amide), poly(aromatic amide), polyester, polyolefin, wool, cellulose based fibers such as cotton, rayon, linen, cellulose acetate, and other modified cellulose, polyurethanes, acrylics, modacrylics, a blend thereof, or a blend comprising any of the above. Preferred fabrics are selected from cotton, poly (aliphatic amide), poly (aromatic amide), polyester, polyurethane, and blends thereof.

The fabric laminate comprises at least one layer of apparel fabric, and preferably comprises at least two layers of apparel fabric of the same or different fabric. In a preferred embodiment, the fabric laminate comprises at least two layers of apparel fabric, where one layer is a layer of apparel face fabric and another layer is a layer of apparel backing

fabric. The apparel face fabric is generally the outermost layer of the fabric laminate which is exposed to the elements. The apparel face fabric can be any fabric, but is preferably a woven fabric made of poly (aliphatic amide), poly (aromatic amide), polyester, acrylic, cotton, wool and the like. The apparel fabric may also be treated to render it hydrophobic and/or oleophobic. The apparel backing fabric is an inner layer and may be, for example, a knit, woven or non-woven, and may optionally be treated to enhance moisture wicking properties or to impart hydrophobic and/or oleophobic properties. Apparel fabric layers may be additionally treated with suitable materials as to impart properties such as flame resistance, antistatic, ultra violet (UV) resistance, controlled infra red (IR) reflectance, camouflage pattern, and the like.

Additionally, the fabric laminate comprises a layer comprising at least a sulfonated aromatic polymer. By the term aromatic polymer, it is meant a polymer having aromatic groups in the polymer backbone, or main chain. Preferred sulfonated aromatic polymers have a molecular weight of at least about 10,000. The sulfonated aromatic polymer of the present invention comprises at least one repeating aromatic group selected from 5, 6,or 7 membered single or fused rings having 0, 1, 2, 3 or 4 heteroatoms selected from N, O or S, and at least a portion of the aromatic groups have at least one pendant group comprising sulfonic acid, or its salt. Suitable salts include but are not limited to those formed with ammonia, amines (primary, secondary or tertiary), or with mono or multivalent metal ions such as $Na^+$, $K^+$, $Ca^{++}$, $Fe^{+++}$, $Ba^{++}$, $Cu^{++}$, $Zr^{++++}$, and $Al^{+++}$.

Sulfonic acid groups may be attached directly to the aromatic ring, or may be attached to a substituent on the aromatic ring. Preferred are polymers having a sulfonic acid equivalent weight of about 400 - 1000 (IEC: 1.0 - 2.5 meq/g). More preferably, the sulfonated aromatic polymer has a sulfonic acid equivalent weight of about 400 - 800 (IEC: 1.25 - 2.5 meq/g). Aromatic groups may be independently substituted or unsubstituted, and where substituted, substitutents may be selected from $C_{1-8}$ alkyl and haloalkyl, aryl, ketone, hydroxyl, halogen, amine, cyanide, nitrile, sulfide, carbonyl, $C_{1-8}$ ester and $C_{1-8}$ alkoxyl groups.

The sulfonated aromatic polymer may further comprise linkages where at least a portion of the aromatic groups may be linked by one or more linkages comprising ketone, sulfone, ether, sulfide, urethane, amide, imide, and ester groups, and substituted or unsubstituted saturated or unsaturated $C_{1-5}$ alkylene groups, substituted or-unsubstituted phosphine groups, and phosphine oxide, where substituents are selected from halogens such as fluorine or chlorine, aryl, $C_{1-5}$ alkyl, and $C_{1-5}$ haloalkyl. Preferred linkages are sulfone, ether, imide and ketone linkages.

Preferred sulfonated aromatic polymers include but are not limited to sulfonated polysulfone, sulfonated polyether sulfone, sulfonated polyether ketone, sulfonated biphenyl sulfone, sulfonated polyphthalazinone ether ketone, sulfonated polyphenylene oxide, sulfonated polyimide, sulfonated polybenzimidazole, and blends thereof. Other aromatic polymers which may be suitable for use in the present invention include sulfonated forms of polyetherether sulfone (PEES), polyarylether sulfone (PAS), polyphenylene sulfone (PPSU), polyether ketone (PEK), polyether ketone ketone (PEKK), polyether ether ketone ketone (PEEKK), polyether ketone-ether ketone-ketone (PEKEKK), poly(bisbenzoxazole) (PBO), poly(benzo(bis-diazole)-1,4-phenylene)) (PBI), polyaramid (PAR), poly(benzo(bis-thiazole)-1,4-phenylene (PBT), polyphenylene sulfoxide (PPSO), polyphenylene sulfide (PPS), polyparaphenylene (PPP), poly(phenylquinoxaline) (PPQ), poly(trifluoro-methyl-bis(phthalimide)-phenylene)), and poly(triphenylphosphine oxide sulfide-phenylsulfone-sulfide). Sulfonated aromatic polymers may comprise a blend of more than one sulfonated polymer or a blend of sulfonated and non-sulfonated polymers, including but not limited to the above-mentioned polymers. Where compatible, blends may also comprise other non-sulfonated polymers such as poly(vinylidene fluoride). Blends are useful for tailoring mechanical properties of the polymer films (in both dry and wet state), moisture vapor permeation rates, swelling, dimensional changes and the like.

The sulfonated aromatic polymer optionally may be crosslinked by covalent bonding or ionic bonding. Without wishing to be bound by theory, it is believed that swelling of hydrated sulfonated aromatic polymer films may be further controlled by crosslinking the polymer chains, in addition to controlling the amount of sulfonation. Cross-linking may be accomplished by a number of means including such as heating, radiation, electron beam or reaction with the addition of crosslinking agents including multifunctional chemical species, such as multivalent ions including Ca or Fe ions, or difunctional and multifunctional organic compounds such as diamines and the like.

Methods for making the sulfonated aromatic polymers used in the present invention are known and may be found, for example, in U.S. Patent Nos. 5,013,765, 5,362,836, and 6,451,921, and in the examples of the present invention. Suitable sulfonated aromatic polymers may be made for example, by the sulfonation of aromatic polymers, or by polymerizing sulfonated monomers to form sulfonated aromatic polymers for use in the present invention.

The layer comprising the sulfonated aromatic polymer may further comprise at least one additional component such as fillers or plasticizers, for example, fumed silica or plasticizers may be used to improve mechanical properties and/or to reduce swelling, and titanium dioxide for U.V. stability. The sulfonated aromatic polymer is preferably in the form of a film (Fig. 1 at 20), or a solution or dispersion. The layer comprising the aromatic polymer may form a distinct or continuous layer of the fabric laminate (Fig. 2). Alternately, the layer comprising the sulfonated aromatic polymer may partially or fully reside in one or more layers of apparel fabric 25 and 25a (Fig. 3). The layer comprising the aromatic polymer may provide additional benefits to the fabric such as waterproofness. Waterproofness is generally defined as having a water entry pressure greater than about 5 kPa water pressure.

Sulfonated aromatic polymers may form a flexible and pliable composite layer when used in combination with one or more substrates, such as membranes or films. Thus, the layer comprising the sulfonated aromatic polymer may further comprise a composite. A further embodiment of the present invention is therefore directed to a fabric laminate comprising at least one layer of apparel fabric and a composite comprising at least one substrate and a sulfonated aromatic polymer. The composite layer is laminated to at least one layer of apparel fabric to form the fabric laminate. Suitable composite substrates provide protection and/or support for the sulfonated aromatic polymer and include porous, microporous, and non-porous substrates, provided that where the substrate is non-porous, the desired moisture vapor transmission properties of the fabric laminate are maintained. Porous or microporous substrates may be open or closed pore structures and are formed from materials such as polysulfones, polyether sulfones, polyetherketones, polyurethane, polyamides, polyimides, polyolefins, porous polytetrafluoroethylene such as expanded polytetrafluoroethylene (ePTFE), and the like.

Where the substrate is an open pore substrate, at least a portion of the sulfonated aromatic polymer may fill the porous substrate, partially or fully. While not wishing to be bound by theory, it is believed that the swelling of the sulfonated aromatic polymer may be further controlled by containment within the pores of the porous or microporous substrates. Thus, composites wherein the sulfonated aromatic polymer resides fully or partially within the pores of an open pore substrate may provide greater dimensional stability and higher wet strength in high humidity or in the presence of water. Porous or microporous membranes which enhance waterproofness and are resistant to wind are preferred, and ePTFE is particularly preferred. The average pore size of the preferred ePTFE membranes ranges from about 0.03 to 100 um and preferred porosity is in the range of 50-95%. Preferred non-porous substrates include polyether-esters, polyether-amides, polyurethanes, polyvinyl alcohol, cellulose acetate, and polyimides.

The composite of at least one substrate and a sulfonated aromatic polymer can be arranged in multiple configurations. Examples of possible composite configurations included, but are not limited to the examples illustrated in Figs. 4-21. Fig. 4, Fig. 5, and Fig. 6 depict composites where the sulfonated aromatic polymer 20 resides essentially on the surfaces of non-porous 21 and porous substrates including a closed pore substrate 22 and an open pore substrates 23, respectively, and may form a continuous layer. For purposes of the instant specification, the term porous is meant to include both porous and microporous. Fig. 7 depicts another embodiment where the sulfonated aromatic polymer 20 resides essentially on the surface of an open pore substrate 23.

Figs. 8 and 9 each show a composite where a portion of the sulfonated aromatic polymer 20 partially fills a porous substrate 23. Figs. 10 and 11 each show a composite where essentially all of the sulfonated aromatic polymer 20 is contained within a porous substrate 23, partially filling the porous substrate. Fig. 12 depicts a porous substrate 23 that is substantially filled with the sulfonated aromatic polymer 20. Figs. 13 and 14 each show an example of a porous substrate 23 which is substantially filled by a portion of the sulfonated aromatic polymer 20. If desired, additional substrates can be added, as shown in Figs. 15 - 19. Figs. 15 and 16 each show embodiments of composites where the sulfonated aromatic polymer 20 is contained between porous substrates 23 and 23a. Fig. 15 depicts an embodiment where the porous substrates 23 and 23a are essentially brought into contact with one another, and the sulfonated aromatic polymer 20 resides completely within the substrates, a portion of the polymer within each substrate. Fig. 16 depicts an embodiment where a portion of the sulfonated aromatic polymer 20 resides in each of the porous substrates 23 and 23a, with the substrates separated by a distinct layer of the sulfonated aromatic polymer that does not reside within the substrates. Figs. 17 and 18 show examples of composites where the sulfonated aromatic polymer 20 is contained between a porous substrate 23 and a non-porous substrate 21, where at least a portion of the sulfonated aromatic polymer resides within the porous substrate. Fig. 17 shows an example where the two substrate layers are contacting each other and essentially all of the sulfonated aromatic polymer 20 resides within the open pore substrate 23, and Fig. 18 shows an example where only a portion of the sulfonated aromatic polymer 20 resides within the porous substrate 23. It is clear that closed pore or open pore substrates could also be envisioned in place of the non-porous substrates in each of the examples. Fig. 19 shows a composite of a sulfonated aromatic polymer 20, non-porous substrate 21 and two open pore substrates 23 and 23a wherein portions of the sulfonated aromatic polymer and non-porous substrate resides within each of the porous substrates. Fig. 20 shows a composite of the sulfonated aromatic polymer 20, non-porous substrate 21 and two open pore substrates 23 and 23a wherein portions of the sulfonated aromatic polymer resides within each of the porous substrates and portions of non-porous substrate resides within one of the porous substrates.

It can be seen that the sulfonated aromatic polymer may coat or cover a porous or non-porous substrate, essentially residing on the surface of the substrate as a distinct or continuous layer. In the case of open pore substrates, the sulfonated aromatic polymer may additionally be imbibed or impregnated into a substrate or substrates, partially filling or substantially filling a porous a substrate through its entire thickness. The sulfonated aromatic polymer may reside completely within the porous substrates, or only a portion of the sulfonated aromatic polymer may reside within the porous substrate, and the remaining sulfonated aromatic polymer resides on the surface of the substrate as a distinct layer. It should be understood that the figures are illustrative of only some of the embodiments of the present invention, but do not show all the possible embodiments of the invention.

One embodiment of the present invention is a fabric laminate comprising at least one layer of apparel fabric

and a composite comprising a sulfonated aromatic polymer and at least one porous substrate is shown in Fig. 21. In this construction the sulfonated aromatic polymer 20 is contained between two porous substrates 23 and 23a. The composite is laminated by discontinuously applied adhesive 24 and 24a to apparel face fabric 25 and apparel backing fabric 25a. The adhesive is shown as discontinuous dots, but could be in the form of a grid, lines, and the like. The adhesive could also be applied continuously, provided sufficient moisture vapor transmission properties are maintained.

A preferred fabric laminate comprises at least one apparel fabric layer selected from polyamide, cotton and polyester fabric, which has been laminated to a composite comprising an ePTFE substrate and a sulfonated aromatic polymer that has been selected from sulfonated polyether sulfone, sulfonated polyether ketone, sulfonated biphenyl sulfone, sulfonated polyimide and sulfonated polyphthalazinone ether ketone. Preferably, at least a portion of the sulfonated aromatic polymer resides within the ePTFE substrate, partially or substantially filling the substrate to form a composite. A more preferred composite further comprises at least two additional substrates including at least one non-porous substrate and at least-one additional ePTFE membrane. In one preferred embodiment, at least a portion of the sulfonated aromatic polymer resides partially or fully within two ePTFE substrates. In another preferred embodiment, a portion of the non-porous substrate is in contact with the sulfonated aromatic polymer, and a portion of the non-porous substrate partially resides in the additional ePTFE substrate (Fig. 19). The composite is then laminated to at least one layer of apparel fabric.

In another embodiment of the present invention, the fabric laminate is formed as a waterproof covering such as an article of apparel or enclosure capable of transmitting moisture vapor, wherein apparel articles include garments such as outer wear, under wear, jackets, top, shirts, pants, gloves, foot wear, hoods, and enclosures include tents, sleeping bags, casualty bags, shelters, and the like. The article of apparel preferably comprises a fabric laminate comprising an apparel face fabric layer, an apparel backing fabric layer, and a layer having the sulfonated aromatic polymer or a composite comprising a sulfonated aromatic polymer and a substrate layer.

A method of making the fabric laminate described above, comprises the steps of laminating at least one layer of apparel fabric with a layer having a sulfonated aromatic polymer, or, preferably, with a composite comprising a substrate and a sulfonated aromatic polymer. Lamination may be accomplished by any method known in the art. For example, lamination may be accomplished by thermal bonding, mechanical attachment such as sewn connections or other fixations, and adhering or coating at least a portion of two or more layers of the present invention. The layer comprising at least the sulfonated aromatic polymer, or the composite, is laminated directly onto at least one layer of apparel fabric, for example by adhering films comprising the sulfonated aromatic polymer with heat or adhesives. As mentioned above, adhesives may be applied discontinuously or continuously or in patterns provided sufficient moisture vapor transmission properties are maintained. The -adhesive or sewn connections could be present throughout the layers such as in quilting, point bonding in non-woven materials, or may only be present at the seams or at the cuffs in the case of garments, gloves and other articles of clothing. Therefore, the term "laminate" as used herein refers to any layered construction held together with connections. Alternately, where the sulfonated aromatic polymer is in a solution or dispersion, it may be laminated to a fabric layer or a substrate layer by any known coating method such as painting, roll coating, spraying, extrusion and the like, onto at least one layer of apparel fabric or substrate.

Moisture Vapor Transmission Rate Test

Moisture vapor transmission rates (MVTRs) were determined using the procedure set forth in U.S. Pat. No. 4,862,730 using potassium acetate as the salt and open pore ePTFE for the waterproof moisture vapor permeable membranes. These membranes nominally had a porosity of between 75% and 80%, average pore size of 0.2 um, with a thickness of approximately 0.04 mm. The environment was maintained at 50% relative humidity. The water bath was maintained at 23± 0.5 °C. The samples were constrained in a 3" (about 7.5 cm) diameter plastic hoop and placed on the bath with woven shell fabric facing up. The purpose of using the plastic hoop was to avoid any buckling of the sample. The samples were conditioned on the bath with the salt cup on top for about 15 minutes before starting the test. The MVTR number is reported in the unit of g/m$^2$/day.

Ion Exchange Capacity and Equivalent Weight

Ion exchange capacity (IEC) of a film or powder sample was measured by acid-base titration. If not in the acid form, the sample was first converted to the acid form by immersing in 150 ml 1N HCl overnight followed by rinsing thoroughly with demineralised water to remove any unreacted HCl. The sample was then dried in an oven at about 50° C until a constant weight was obtained. This is referred to as mass of the dry sample (m). The dried sample was immersed in 100 ml 0.1 N NaOH solution for about 24 hours. A 10 ml sample of the solution was decanted and titrated with 0.1 N HCl using methyl-orange as indicator. The IEC was calculated according to the following formula.

$$IEC = \frac{(N1 \times V1) - 10(N2 \times V2)}{m}$$

where N1, N2 and V1, V2 are normality and volume of NaOH and HCl respectively and m is mass of dry sample. Because N1 and N2=0.1N and V1=100 ml, IEC could be written as IEC = (10-V2)/m. The unit of IEC is meq/g. Equivalent weight (EW) is defined as 1000/IEC, and the units are reported as g/equivalent.

The following examples are illustrative of the present invention, however it should be apparent that the present invention is not limited by the examples.

Sulfonated Aromatic Polymer Preparation:

Sulfonated Polyether sulfone (sPES):

sPES was obtained which was prepared from PES powder from Solvay Advanced Polymers, L.L.C. (Alpharetta, GA). The procedure for sulfonation was performed substantially according to the method described in "Influence Of The Nature Of Polymer Matrix And The Degree Of Sulfonation On The Properties Of Membranes"(Komkova et al., Polymer Science, ser. A, vol. 43, No. 3, 2001 pp. 300-307), which was used for the preparation of sulfonated polysulfone. The resulting sPES polymer had an IEC of about 1 meq/g as measured by the procedure described above. The calculated EW was about 1000 g/equivalent. The sulfonated polymer was comprised of repeat units with the following structure.

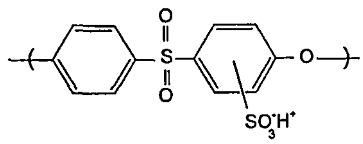

Sulfonated Polyetherether Ketone (sPEEK):

sPEEK was obtained which was prepared from PEEK powder obtained from Entegris Inc., (Chaska, MN USA) that was sulfonated substantially according to the method described in "Influence Of The Nature Of Polymer Matrix And The Degree Of Sulfonation On The Properties Of Membranes" (Komkova et al., Polymer Science, ser. A, vol. 43, No. 3, 2001, pp. 300-307). Sulfonated PEEK samples were produced with three different amounts of sulfonation having IEC of about 1.3 meq/g, about 1.5 meq/g, and about 2.52 meq/g. The calculated equivalent weights were about 769, 667 and 397 g/equivalent respectively. A potassium salt version of the 1.5 IEC polymer was also prepared by neutralizing with KOH solution. The sulfonated polymer was comprised of repeat units with the following structure.

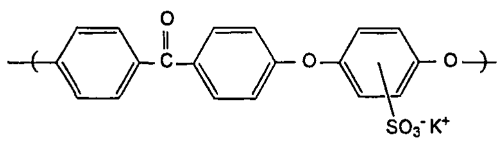

Sulfonated Biphenyl Sulfone Hydrogen Form (sBPSH):

sBPSH was obtained which was prepared substantially in accordance with the method described in PCT publication WO 02/25764 A1 entitled "Ion-Conducting Sulfonate Polymeric Materials" (McGrath, et al., March 28, 2002). The Na/K form of sBPSH was produced having an IEC of about 1.52 meq/g (EW: 660 g/equivalent). The sBPSH polymer was a copolymer having the following repeat units.

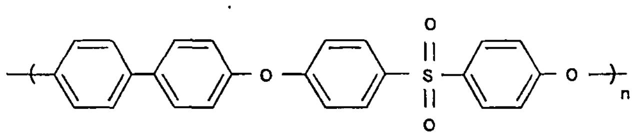

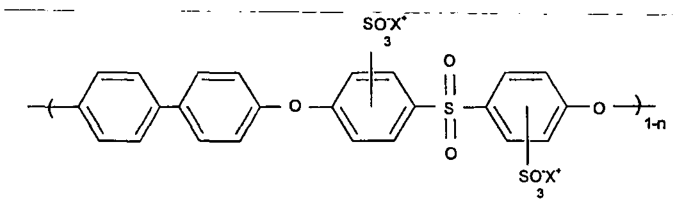

where X is Na or K, and n is greater than zero and less than one.

Sulfonated Polyphthalazinone Ether Ketone (sPPEK):

sPPEK was obtained which was prepared substantially in accordance with the method described in PCT publication WO 03/005474 A2 entitled "Ionomer For Use In Fuel Cells And Method Of Making Same" (Guyu Xiao etal., January 16, 2003). The Na/K form of sPPEK polymer was produced having an IEC of about 1.67 meqv/g (EW: 600 g/equivalent). sPPEK polymer is a copolymer having the following repeat units.

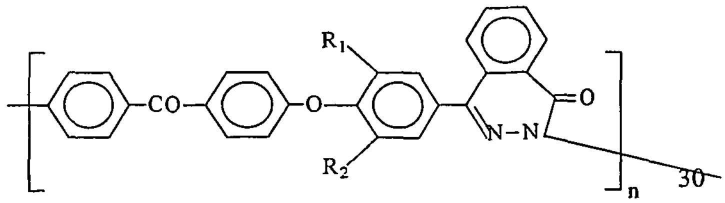

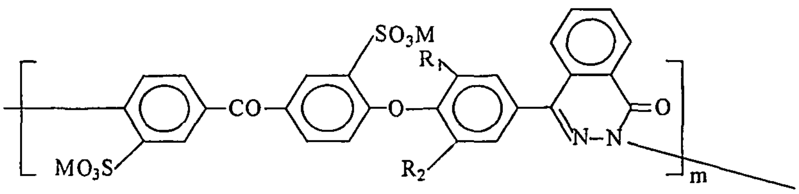

where M is Na or K, and R1 and R2 are H, and n is greater than zero and less than one.

Sulfonated Poly(2,6-dimethyl-p-phenylene oxide) (sPPO)

sPPO was obtained which was prepared using PPO powder from Polysciences, Inc. (Warrington, PA USA). The sulfonation procedure was substantially according to the method described in "Influence of the nature of polymer matrix and the degree of sulfonation on the properties of membranes" (Komkova et al., Polymer Science, ser. A, vol. 43, No. 3, 2001 pp. 300-307), which was used for the preparation of sulfonated polysulfones. A sPPO polymer was produced having an IEC of about 2.1 meq/g as measured by the procedure described above. The calculated EW was about 476 g/equivalent. The sulfonated polymer was comprised of repeat units with the following structure.

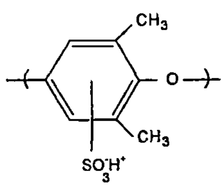

Examples

Examples 1-3:

Fabric laminates prepared from a woven polyamide fabric and films of sPES, sPEEK, and a PES/sPEEK blend were tested for Moisture Vapor Transmission Rates (MVTR).

Films of sPES, sPEEK, and a 20/80 wt % mixture of PES and sPEEK were obtained that had been prepared

by dissolving the polymers in dimethyl formamide (DMF) solvent to form a 20% casting solution by stirring at room temperature for at least about 30 min. The polymers were cast using a casting knife on a glass plate, and dried at about 60° C for about 4 to 6 hours to form films that were lifted off the glass plate using tweezers. The obtained films were dried at about 100° C in a vacuum oven for about 36 hours.

Following vacuum drying, the films were laminated to a woven fabric using a multipurpose spray adhesive, Super 77 (3M Engineered Adhesive Division, St. Paul, MN 55144-1000). The adhesive was lightly sprayed on the surface of the fabric, and the film was placed on top of the adhesive. Hand pressure was applied to ensure good contact between the two layers. The woven fabric was a plain weave polyamide Nylon 6,6 fabric (2.8 oz/square yard, or about 90 g/m$^2$, style # 130665, Milliken & Company, Spartanburg, SC). The fabric was pre-treated with a fluoropolymer resin (Mitsubishi Textile Chemicals, Somerset, NJ) to impart durable water repellency (DWR) using procedures recommended by the supplier. The resulting fabric laminates were characterized for moisture vapor transmission rate (MVTR), the results of which are reported in g/m$^2$/day below.

| Example No. | Polymer | Film Thickness | MVTR |
|---|---|---|---|
| 1 | sPES (IEC=1) | 40 um | 636 |
| 2 | sPEEK (IEC=2.52) | 35 um | 10,213 |
| 3 | 20%PES/80%sPEEK (sPEEK IEC=2.52) | 30 um | 11,485 |

Example 4:

A fabric laminate of a film of sPPEK and a woven polyamide fabric was prepared and tested for Moisture Vapor Transmission Rate (MVTR).

Approximately 1.11g sPPEK powder was dissolved in DMSO to form about a 9.4% solution by weight. The dissolution was performed by shaking in an incubator at about 60°C for 24 hours. A film was cast on an 8"X16" (about 20 cm X 40 cm) glass plate using a 5" (about 12.7 cm) wide draw down bar (BYK Gardner, Inc., Columbia, MD) having a 20 mil (0.51 mm) opening. The film was dried in an air circulated oven for about 6 hours at about 30°C. Drying was continued at about 60°C for 24 hours followed by heating to about 100°C for 24 hours. A final heating was performed at about 150°C for 15 minutes. The resulting film was then laminated to a woven polyamide fabric as described in Examples 1-3 above. The fabric laminate had a MVTR of about 7551 g/m$^2$/day.

Examples 5-7:

Fabric laminates were prepared from three samples of sPEEK film which were laminated to a woven polyamide fabric and tested for Moisture Vapor Transmission Rates (MVTR).

A film was obtained which was prepared by casting a 20% solution by weight of sPEEK (IEC = 1.3 meq/g) in DMF on a glass plate using a casting knife. The polymer was dried at about 60° C for about 4 to 6 hours to form a film, and lifted off the glass plate using tweezers. The film was further dried at about 95°C for about 21 hours in an air circulated oven.

The 5" X 10" (about 12.5 cm X 25 cm) film was cut into three equal length pieces. Two of the pieces were further heat treated at about 180°C for 15 minutes, followed by heating to about 200°C for about 10 minutes to impart cross-linking of the sulfonic acid groups. All three films were then laminated to woven polyamide fabric as described in Examples 1-3 above. An additional knit layer was applied to the film side of all samples by first spraying the spray adhesive, Super 77 (3M Engineered Adhesive Division, St. Paul, MN) on the knit and placing the laminate with film side towards the knit. A gentle hand pressure was applied to ensure good contact between the layers. The knit employed was a 1.1 oz/square yard (about 35 g/m$^2$) polyester warp knit (style # A1012, Native Textiles, Inc., New York, NY). The resulting laminates were characterized for MVTR, the results of which are reported in g/m$^2$/day below.

| Example No. | Heat Treating | MVTR |
|---|---|---|
| 5 | No | 7,348 |
| 6 | Yes | 5,555 |
| 7 | Yes | 5,641 |

Example 8:

A fabric laminate was formed from a solution of sBPSH applied to the ePTFE membrane side of an ePTFE/ polyester knit laminate, and then further laminated to a woven polyamide fabric, and tested for Moisture Vapor Transmission Rate (MVTR).

A 20% wt solution of sBPSH was made by dissolving the powder in N-methyl pyrrolidinone (NMP) solvent. The dissolution was performed in an incubator/shaker at about 55°C for at least about 12 hours. The solution was used to make a composite with a pre-fabricated ePTFE/knit laminate. The ePTFE/knit laminate was formed from an expanded polytetrafluoroethylene (ePTFE) membrane weighing about 50 g/$m^2$ adhered to a polyester knit described in Example 7, using a polyurethane adhesive described in U.S. Patent No. 4,194,041. The adhesive was applied in a discontinuous pattern so as to achieve approximately 35% area coverage of the adhesive. The ePTFE membrane (W.L.Gore & Assoc. Inc., Elkton, MD) was made substantially according to the method described in U.S. Patent No. 3,953,566. The ePTFE side of the laminate was treated with atmospheric plasma substantially according to procedures described in U.S. Patent No. 6,118,218 to improve wetting characteristics.

The composite was prepared by placing an 8" x 16" (about 20 cm X 40 cm) piece of the ePTFE/knit laminate in a fume hood with membrane side up. It was pre-wetted using a small amount of NMP solvent after which the 20% wt sPBSH solution was cast on top using a draw down bar with 15 mil (about 0.38 mm) opening as described above in Example 4. The resulting composite was allowed to dry at ambient conditions for about 2 days. It was then taped to a glass plate to avoid curling and heated in an air circulated oven at about 100°C for about 16 hours, followed by heating for about 5 hours at about 150°C.

An additional layer of a woven polyamide fabric was adhered to the sBPSH polymer side using the procedure and fabric described in Examples 1-3 above. The MVTR of the final laminate was about 1,996 g/$m^2$/day.

<u>Example 9:</u>

A fabric laminate was formed from a solution of sPPEK applied to the ePTFE membrane side of an ePTFE/polyester knit laminate, and then further laminated to a woven polyamide fabric, and tested for Moisture Vapor Transmission Rate (MVTR).

A 10% wt solution of sPPEK was made by dissolving the polymer in dimethyl sulfoxide (DMSO) solvent. The dissolution was performed in an incubator/shaker at about 55°C for at least about 12 hours. The solution was used to make a composite with a pre-fabricated ePTFE/knit laminate. The ePTFE/knit laminate was formed from an expanded polytetrafluoroethylene (ePTFE) membrane weighing about 50 g/$m^2$ adhered to a polyester knit as described in Example 7, using a polyurethane adhesive described in US Patent No. 4, 194, 041. The adhesive was applied in a discontinuous pattern so as to achieve approximately 35% area coverage of the adhesive. The ePTFE membrane (W.L.Gore & Assoc. Inc., Elkton, MD) was made substantially according to the method described in U.S. Patent No. 3,953,566. The ePTFE side of the laminate was treated with atmospheric plasma substantially according to procedures described in U.S. Patent No. 6,118,218 to improve wetting characteristics.

The composite was prepared by placing an 8" X 16" (about 20 cm X 40 cm) piece of the ePTFE/knit laminate in a fume hood with membrane side up. It was pre-wetted using a small amount of DMSO solvent after which the 20% wt sPPEK solution was cast on top using a draw down bar with 15 mil (about 0.38 mm) opening as described above in Example 4. The resulting composite was allowed to dry at ambient conditions for about 2 days. It was then taped to a glass plate to avoid curling and heated in an air circulated oven at about 100°C for about 16 hours, followed by heating for about 5 hours at about 150°C.

An additional layer of a woven polyamide fabric was adhered to the sPPEK polymer side using the procedure and fabric described in Examples 1-3 above. The MVTR of the final laminate was about 4831 g/$m^2$/day.

<u>Example 10-11:</u>

Films of sPEEK polymer and its K salt version were formed and then converted to a calcium salt from and laminated to a woven polyamide to form a fabric laminate and tested for MVTR.

A sPEEK polymer with an IEC of about 1.5 meq/g and its K salt version were dissolved in DMSO in a incubator/shaker at about 50°C for 24 hours to obtain a 20% solution by weight. Films were cast on a glass plate using a draw down bar with about a 10 mil (about 0.25 mm) opening. Resulting films were allowed to dry in the hood under ambient conditions for at least 12 hours. They were then dried at about 100°C for about 22 hours followed by heating for about 2 hours at about 150°C. They were then converted to calcium salt form by soaking in a 1 N $CaCl_2.2H_2O$ solution for at least 24 hours. Gentle shaking was performed in the shaker during the soaking period. The films were taken out of the soaking solution and rinsed with excess deionized water twice to remove any $CaCl_2$ salt. The pH of the rinsed water was measured to be about 6-7.

The films were dried at ambient conditions for several days, and then laminated to a woven polyamide fabric as described in Examples 1-3 and characterized for MVTR. The results are reported in g/$m^2$/day below.

| Example No. | Starting Polymer | Film Thickness | MVTR |
|---|---|---|---|
| 10 | sPEEK (IEC=1.5) (proton version) | 30 um | 10,097 |
| 11 | sPEEK (IEC=1.5), (K salt version) | 30 um | 9,489 |

Example 12-13:

Fabric laminates of woven polyamide fabric and sPEEK and sPPO films were prepared, and tested for MVTR.

Films of sPEEK and sPPO were obtained which were prepared by dissolving samples of sPEEK (IEC=2.52 meq/g) and sPPO (IEC=2.1 meq/g) polymers in dimethyl formamide (DMF) solvent to form a 20% casting solution by stirring at room temperature for at least 30 min. The polymers were cast using a casting knife on a glass plate, dried at about 60° C for about 4 to 6 hours to form films, and the resulting films were lifted off the glass plate using tweezers. Films were made into laminates with a woven polyamide fabric using procedures and fabric described in Examples 1-3. The resulting fabric laminates were characterized for MVTR. Results are reported in g/m$^2$/day below.

| Example No. | Polymer | Film Thickness | MVTR |
|---|---|---|---|
| 12 | sPEEK | 15 um | 14,321 |
| 13 | sPPO | 35-40 um | 12,122 |

Example 14:

A fabric laminate of sPPEK and polyamide fabric was formed and tested for MVTR.

A 10% by weight solution of sPPEK in DMSO was cast into a film on a glass plate using a draw down bar with about a 10 mil (about 0.25 mm) opening. The cast film was allowed to dry in the air hood for about 22 hours at ambient conditions followed by heating at about 70°C in an air circulated oven for about 24 hours. The film was moistened lightly using a wet paper towel and lifted off the glass plate. Film thickness was about 17 um. The film was allowed to further dry at about 70° C for 48 hours in an air circulated oven, and was laminated to a woven polyamide fabric using the procedure and fabric described in Examples 1-3. The MVTR of the laminate was 12,729 g/m$^2$/day.

**Claims**

1. A fabric laminate capable of transmitting moisture vapor comprising
at least one layer of apparel fabric laminated to
a layer comprising at least a sulfonated aromatic polymer, wherein the sulfonated aromatic polymer comprises at least one repeating aromatic group selected from 5, 6,or 7 membered single or fused rings having 0, 1, 2, 3, or 4 heteroatoms selected from N, O or S, and at least a portion of the aromatic groups having at least one pendant group comprising sulfonic acid, or its salt, wherein the sulfonated aromatic polymer has a sulfonic acid equivalent weight of 400-1000 (IEC: 1.0 - 2.5 meq/g).

2. The fabric laminate of claim 1, wherein the at least one layer of apparel fabric is selected from knit, woven or non-woven apparel fabrics.

3. The fabric laminate of claim 1, wherein the at least one layer of apparel fabric comprises synthetic or natural fibers of polymers selected from poly(aliphatic amide), poly(aromatic amide), polyester, polyolefin, wool, cellulose based fiber such as cotton, rayon, linen, cellulose acetate and other modified cellulose, polyurethane, acrylic, modacrylic and a blend thereof.

4. The fabric laminate of claim 1, comprising at least two layers of apparel fabric.

5. The fabric laminate of claim 1, wherein the sulfonated aromatic polymer has a sulfonic acid equivalent weight of 400 - 800 (IEC: 1.25 - 2.5 meq/g).

6. The fabric laminate of claim 1, wherein at least a portion of the aromatic groups have substitutions selected from $C_{1-8}$ alkyl and haloalkyl, aryl, ketone, hydroxyl, halogen, amine, cyanide, nitrile, sulfide, carbonyl, $C_{1-8}$ ester and $C_{1-8}$ alkoxyl groups.

7. The fabric laminate of claim 1, wherein at least a portion of the aromatic groups are linked by one or more linkages comprising ketone, sulfone, ether, sulfide, amide, imide, urethane, ester, substituted or unsubstituted saturated or unsaturated $C_{1-5}$ alkylene, substituted or unsubstituted phosphine, and phosphine oxide groups.

8. The fabric laminate of claim 1, wherein the sulfonated aromatic polymer has one or more linkages selected from ketone, sulfone, imide and ether.

9. The fabric laminate of claim 1, wherein the sulfonated aromatic polymer is crosslinked.

10. The fabric laminate of claim 1, wherein the sulfonated aromatic polymer is ionically crosslinked.

11. The fabric laminate of claim 1, wherein the layer comprising the sulfonated aromatic polymer further comprises at least one additional component.

12. The fabric laminate of claim 1, wherein the layer comprising the sulfonated aromatic polymer comprises a composite of the sulfonated aromatic polymer and at least one substrate.

13. The fabric laminate of claim 12, wherein the sulfonated aromatic polymer resides partially or fully in the at least one substrate.

14. The fabric laminate of claim 1, wherein the fabric laminate is waterproof.

15. The fabric laminate of claim 1, wherein the fabric laminate is formed as an article of apparel or enclosure.

16. The fabric laminate of claim 1,wherein the fabric laminate is an article of apparel selected from outer wear, under wear, jackets, pants, gloves, hoods and foot wear.

17. The fabric laminate of claim 1, wherein the moisture vapor transmission rate is at least 600 $g/m^2/day$

18. A fabric laminate capable of transmitting moisture vapor comprising
at least one layer of apparel fabric laminated to
a composite comprising at least one substrate and a sulfonated aromatic polymer, the sulfonated aromatic polymer comprising
at least one repeating aromatic group selected from 5, 6, or 7 membered single or fused rings having 0, 1, 2, 3, or 4 heteroatoms selected from N, O or S, and at least a portion of the aromatic groups having at least one pendant group comprising sulfonic acid, or its salt, wherein the sulfonated aromatic polymer has a sulfonic acid equivalent weight of 400 - 1000 (IEC: 1.0- 2.5 meq/g).

19. The fabric laminate of claim 18 wherein at least a portion of the aromatic groups are linked by one or more linkages comprising ketone, sulfone, ether, sulfide, amide, imide, urethane, ester, substituted or unsubstituted saturated or unsaturated $C_{1-5}$ alkylene, substituted or unsubstituted phosphine, and phosphine oxide groups.

20. The fabric laminate of clam 18 wherein at least a portion of the aromatic groups are linked by linkages selected from ketone, sulfone, imide and ether.

21. The fabric laminate of claim 18 wherein the sulfonated aromatic polymer has a sulfonic acid equivalent weight of 400 - 800 (IEC: 1.25 - 2.5 meq/g).

22. The fabric laminate of claim 18 wherein at least a portion of the aromatic groups contain substitutions selected from $C_{1-8}$ alkyl and haloalkyl, aryl, ketone, hydroxyl, halogen, amine, cyanide, nitrile, sulfide, carbonyl, $C_{1-8}$ ester and $C_{1-8}$ alkoxyl groups.

23. The fabric laminate of claim 18 wherein the at least one layer of apparel fabric is selected from knit, woven or non-woven apparel fabrics comprising fibers of polymers selected from poly(aliphatic amide), poly(aromatic amide), polyester, polyolefin, wool, cellulose based fibers such as cotton, rayon, linen, cellulose acetate, and other modified cellulose, polyurethane, acrylic, modacrylic, and a blend thereof.

24. The fabric laminate of claim 18, wherein the at least one substrate is porous or microporous.

**25.** The fabric laminate of claim 18, wherein the at least one substrate is expanded polytetrafluoroethylene.

**26.** The fabric laminate of claim 24 wherein at least a portion of the sulfonated aromatic polymer resides within a porous or microporous substrate and partially fills the substrate.

**27.** The fabric laminate of claim 24, wherein at least a portion of the sulfonated aromatic polymer resides within a porous or microporous substrate and substantially fills the substrate.

**28.** The fabric laminate of claim 24, wherein at least a portion of the sulfonated aromatic polymer resides within an expanded polytetrafluoroethylene substrate and partially or substantially fills the substrate.

**29.** The fabric laminate of claim 28, further comprising at least two additional substrates, wherein at least one additional substrate is expanded polytetrafluoroethylene and at least one other substrate is non-porous.

**30.** The fabric laminate of claim 28, further comprising at least one additional expanded polytetrafluoroethylene substrate and wherein at least a portion of the sulfonated aromatic polymer resides partially or fully within both expanded polytetrafluoroethylene substrates.

**31.** The fabric laminate of claim 28 further comprising at least one additional non-porous polyurethane substrate.

**32.** The fabric laminate of claim 18 wherein the fabric laminate is waterproof.

**33.** The fabric laminate of claim 18 wherein the fabric laminate is formed as an article of apparel or enclosure.

**34.** The fabric laminate of claim 18,wherein the fabric laminate is an article of apparel selected from outer wear, under wear, jackets, pants, gloves, foot wear, and hoods.

**35.** A fabric laminate comprising
a layer comprising at least a sulfonated aromatic polymer comprising repeat units selected from sulfonated polysulfone, sulfonated polyether sulfone, sulfonated polyether ketone, sulfonated biphenyl sulfone, sulfonated polyphthalazinone ether ketone, sulfonated polyphenylene oxide, sulfonated polyimide, and sulfonated polybenzimidazole and
at least one layer of apparel fabric,
wherein the layer comprising the sulfonated aromatic polymer has a sulfonic acid equivalent weight of 400-1000 (IEC: 1.0 - 2.5 meq/g), and wherein the sulfonated aromatic polymer and the apparel fabric form a laminate that is capable of transmitting moisture vapor.

**36.** The fabric laminate of claim 35, wherein the sulfonated aromatic polymer has a sulfonic acid equivalent weight of 400 - 800 (IEC: 1.25-2.5 meq/g).

**37.** The fabric laminate of claim 35, further comprising at least one additional layer of apparel fabric selected from woven or non-woven apparel fabrics comprising fibers of polymers selected from poly(aliphatic amide), poly(aromatic amide), polyester, polyolefin, wool, cellulose based fiber such as cotton, rayon, linen, cellulose acetate and other modified cellulose, polyurethane, acrylic, modacrylic, or a blend of them.

**38.** The fabric laminate of claim 35, wherein the fabric laminate is waterproof.

**39.** The fabric laminate of claim 35 wherein the fabric laminate is formed as an article of apparel.

**40.** The fabric laminate of claim 35, wherein the fabric laminate is an article of apparel selected from outer wear, under wear, jackets, pants, gloves, foot wear, and hoods.

**41.** The fabric laminate of claim 35 wherein the sulfonated aromatic polymer has aromatic groups at least a portion of which contain substitutions selected from $C_1$-$C_8$ alkyl and haloalkyl, aryl, ketone, hydroxyl, halogen, amine, cyanide, nitrile, sulfide, carbonyl, $C_{1-8}$ ester and $C_1$-$C_8$ alkoxyl groups.

**42.** The fabric laminate of claim 35, wherein the layer comprising the sulfonated aromatic polymer is a composite comprising the sulfonated aromatic polymer and at least one substrate.

**43.** The fabric laminate of claim 42, wherein at least one substrate is expanded polytetrafluoroethylene.

**44.** The fabric laminate of claim 42, wherein at least a portion of the sulfonated aromatic polymer resides within a porous or microporous substrate and partially fills the substrate.

**45.** The fabric laminate of claim 42, wherein at least a portion of the sulfonated aromatic polymer resides within a porous or microporous substrate and substantially fills the substrate.

**46.** An article of apparel having a fabric laminate capable of transmitting moisture vapor comprising
at least one layer of apparel fabric laminated to
a composite comprising at least one substrate and a sulfonated aromatic polymer, wherein the sulfonated aromatic polymer comprises at least one repeating aromatic group selected from 5, 6,or 7 membered single or fused rings having 0, 1, 2, 3, or 4 heteroatoms selected from N, O or S, and at least a portion of the aromatic groups having at least one pendant group comprising sulfonic acid, or its salt, wherein the polymer has a sulfonic acid equivalent weight of 400-1000 (IEC: 1.0 - 2.5 meq/g).

**47.** The article of apparel of claim 46, wherein the sulfonated aromatic polymer comprises repeat units selected from sulfonated polysulfone, sulfonated polyether sulfone, sulfonated polyether ketone, sulfonated biphenyl sulfone, sulfonated polyphthalazinone ether ketone, sulfonated polyphenylene oxide, sulfonated polyimide and sulfonated polybenzimidazole.

**48.** The article of apparel of claim 46, wherein the fabric laminate has a moisture vapor transmission rate of at least 600 $g/m^2$/day

**49.** The article of apparel of claim 46, wherein at least one substrate is expanded polytetrafluoroethylene.

**50.** The article of apparel of claim 46, comprising at least two layers of apparel fabric.

**51.** The article of apparel of claim 46, wherein the at least one layer of apparel fabric is selected from cotton, poly (aliphatic amide), poly (aromatic amide), polyester, polyurethane, and blends thereof.

**Patentansprüche**

**1.** Textilstofflaminat, imstande, Feuchtigkeitsdampf hindurch zu lassen, umfassend mindestens eine Schicht von Bekleidungsstoff, laminiert auf
eine Schicht, umfassend mindestens ein sulfoniertes aromatisches Polymer, wobei das sulfonierte aromatische Polymer
mindestens eine sich wiederholende aromatische Gruppe, ausgewählt aus 5-, 6-oder 7-gliedrigen einzelnen oder kondensierten Ringen mit 0, 1, 2, 3 oder 4 Heteroatomen, ausgewählt aus N, O oder S, umfasst und wobei zumindest ein Anteil der aromatischen Gruppen mindestens eine anhängende Gruppe, umfassend Sulfonsäure oder ihr Salz, aufweist, wobei das sulfonierte aromatische Polymer ein Sulfonsäureäquivalentgewicht von 400-1000 (IEC: 1,0-2,5 mÄq/g) hat.

**2.** Textilstofflaminat nach Anspruch 1, wobei die mindestens eine Schicht von Bekleidungsstoff aus gestrickten, gewebten oder nichtgewebten Bekleidungsstoffen ausgewählt ist.

**3.** Textilstofflaminat nach Anspruch 1, wobei die mindestens eine Schicht von Bekleidungsstoff synthetische oder natürliche Fasern von Polymeren, ausgewählt aus poly(aliphatischem Amid), poly(aromatischem Amid), Polyester, Polyolefin, Wolle, auf Cellulose basierender Faser, wie beispielsweise Baumwolle, Kunstseide, Leinen, Celluloseacetat und andere modifizierte Cellulose, Polyurethan, Acryl, Modacryl und einem Gemisch davon, umfasst.

**4.** Textilstofflaminat nach Anspruch 1, umfassend mindestens zwei Schichten von Bekleidungsstoff.

**5.** Textilstofflaminat nach Anspruch 1, wobei das sulfonierte aromatische Polymer ein Sulfonsäureäquivalentgewicht von 400-800 (IEC: 1,25-2,5 mÄq/g) hat.

**6.** Textilstofflaminat nach Anspruch 1, wobei zumindest ein Anteil der aromatischen Gruppen Substitutionen, ausge-

wählt aus $C_{1-8}$-Alkyl- und Halogenalkyl-, Aryl-, Keton-, Hydroxyl-, Halogen-, Amin-, Cyanid-, Nitril-, Sulfid-, Carbonyl-, $C_{1-8}$-Ester- und $C_{1-8}$-Alkoxylgruppen, aufweist.

**7.** Textilstofflaminat nach Anspruch 1, wobei zumindest ein Anteil der aromatischen Gruppen durch eine oder mehrere Verknüpfungen, umfassend Keton-, Sulfon-, Ether-, Sulfid-, Amid, Imid-, Urethan-, Ester-, substituierte oder unsubstituierte gesättigte oder ungesättigte $C_{1-4}$-Alkylen-, substituierte oder unsubstituierte Phosphin- und Phosphinoxidgruppen, verknüpft ist.

**8.** Textilstofflaminat nach Anspruch 1, wobei das sulfonierte aromatische Polymer eine oder mehrere Verknüpfungen, ausgewählt aus Keton, Sulfon, Imid und Ether, aufweist.

**9.** Textilstofflaminat nach Anspruch 1, wobei das sulfonierte aromatische Polymer vernetzt ist.

**10.** Textilstofflaminat nach Anspruch 1, wobei das sulfonierte aromatische Polymer ionisch vernetzt ist.

**11.** Textilstofflaminat nach Anspruch 1, wobei die Schicht, umfassend das sulfonierte aromatische Polymer, weiterhin mindestens eine zusätzliche Komponente umfasst.

**12.** Textilstofflaminat nach Anspruch 1, wobei die Schicht, umfassend das sulfonierte aromatische Polymer, einen Verbundstoff aus dem sulfonierten aromatischen Polymer und mindestens einem Substrat umfasst.

**13.** Textilstofflaminat nach Anspruch 12, wobei das sulfonierte aromatische Polymer sich teilweise oder vollständig in dem mindestens einen Substrat befindet.

**14.** Textilstofflaminat nach Anspruch 1, wobei das Textilstofflaminat wasserdicht ist.

**15.** Textilstofflaminat nach Anspruch 1, wobei das Textilstofflaminat als ein Bekleidungsstück oder eine Umhüllung erzeugt wird.

**16.** Textilstofflaminat nach Anspruch 1, wobei das Textilstofflaminat ein Bekleidungsstück, ausgewählt aus Oberbekleidung, Unterwäsche, Jacken, Hosen, Handschuhen, Hauben und Fußbekleidung, ist.

**17.** Textilstofflaminat nach Anspruch 1, wobei die FeuchtigkeitsdampfDurchlässigkeitsrate mindestens 600 $g/m^2$/Tag beträgt.

**18.** Textilstofflaminat, imstande, Feuchtigkeitsdampf hindurch zu lassen, umfassend
mindestens eine Schicht von Bekleidungsstoff, laminiert auf
einen Verbundstoff, umfassend mindestens ein Substrat und ein sulfoniertes aromatisches Polymer, wobei das sulfonierte aromatische Polymer
mindestens eine sich wiederholende aromatische Gruppe, ausgewählt aus 5-, 6-oder 7-gliedrigen einzelnen oder kondensierten Ringen mit 0, 1, 2, 3 oder 4 Heteroatomen, ausgewählt aus N, O oder S, umfasst und zumindest ein Anteil der aromatischen Gruppen mindestens eine anhängende Gruppe, umfassend Sulfonsäure oder ihr Salz, aufweist, wobei das sulfonierte aromatische Polymer ein Sulfonsäureäquivalentgewicht von 400-1000 (IEC: 1,0-2,5 mÄq/g) hat.

**19.** Textilstofflaminat nach Anspruch 18, wobei zumindest ein Anteil der aromatischen Gruppen durch eine oder mehrere Verknüpfungen, umfassend Keton-, Sulfon-, Ether-, Sulfid-, Amid-, Imid-, Urethan-, Ester-, substituierte oder unsubstituierte gesättigte oder ungesättigte $C_{1-5}$-Alkylen-, substituierte oder unsubstituierte Phosphin- und Phosphinoxidgruppen, verknüpft ist.

**20.** Textilstofflaminat nach Anspruch 18, wobei zumindest ein Anteil der aromatischen Gruppen durch Verknüpfungen, ausgewählt aus Keton, Sulfon, Imid und Ether, verknüpft ist.

**21.** Textilstofflaminat nach Anspruch 18, wobei das sulfonierte aromatische Polymer ein Sulfonsäureäquivalentgewicht von 400-800 (IEC: 1,25-2,5 mÄq/g) hat.

**22.** Textilstofflaminat nach Anspruch 18, wobei zumindest ein Anteil der aromatischen Gruppen Substitutionen, ausgewählt aus $C_{1-8}$-Alkyl- und Halogenalkyl-, Aryl-, Keton-, Hydroxyl-, Halogen-, Amin-, Cyanid-, Nitril-, Sulfid-, Carbonyl-,

$C_{1-8}$-Ester- und $C_{1-8}$-Alkoxylgruppen, enthält.

**23.** Textilstofflaminat nach Anspruch 18, wobei die mindestens eine Schicht von Bekleidungsstoff aus gestrickten, gewebten oder nichtgewebten Bekleidungsstoffen, umfassend Fasern von Polymeren, ausgewählt aus poly(aliphatischem Amid), poly(aromatischem Amid), Polyester, Polyolefin, Wolle, auf Cellulose basierenden Fasern, wie beispielsweise Baumwolle, Kunstseide, Leinen, Celluloseacetat und andere modifizierte Cellulose, Polyurethan, Acryl, Modacryl und einem Gemisch davon, ausgewählt ist.

**24.** Textilstofflaminat nach Anspruch 18, wobei das mindestens eine Substrat porös oder mikroporös ist.

**25.** Textilstofflaminat nach Anspruch 18, wobei das mindestens eine Substrat expandiertes Polytetrafluorethylen ist.

**26.** Textilstofflaminat nach Anspruch 24, wobei zumindest ein Anteil des sulfonierten aromatischen Polymers sich innerhalb eines porösen oder mikroporösen Substrats befindet und das Substrat teilweise füllt.

**27.** Textilstofflaminat nach Anspruch 24, wobei zumindest ein Anteil des sulfonierten aromatischen Polymers sich innerhalb eines porösen oder mikroporösen Substrats befindet und das Substrat im Wesentlichen füllt.

**28.** Textilstofflaminat nach Anspruch 24, wobei zumindest ein Anteil des sulfonierten aromatischen Polymers sich innerhalb eines expandierten Polytetrafluorethylensubstrats befindet und das Substrat teilweise oder im Wesentlichen füllt.

**29.** Textilstofflaminat nach Anspruch 28, weiterhin umfassend mindestens zwei zusätzliche Substrate, wobei mindestens ein zusätzliches Substrat expandiertes Polytetrafluorethylen ist und mindestens ein anderes Substrat nicht-porös ist.

**30.** Textilstofflaminat nach Anspruch 28, weiterhin umfassend mindestens ein zusätzliches expandiertes Polytetrafluorethylensubstrat, und wobei zumindest ein Anteil des sulfonierten aromatischen Polymers sich teilweise oder vollständig innerhalb beider expandierter Polytetrafluorethylensubstrate befindet.

**31.** Textilstofflaminat nach Anspruch 28, weiterhin umfassend mindestens ein zusätzliches nicht-poröses Polyurethansubstrat.

**32.** Textilstofflaminat nach Anspruch 18, wobei das Textilstofflaminat wasserdicht ist.

**33.** Textilstofflaminat nach Anspruch 18, wobei das Textilstofflaminat als ein Bekleidungsstück oder eine Umhüllung erzeugt wird.

**34.** Textilstofflaminat nach Anspruch 18, wobei das Textilstofflaminat ein Bekleidungsstück, ausgewählt aus Oberbekleidung, Unterwäsche, Jacken, Hosen, Handschuhen, Fußbekleidung und Hauben, ist.

**35.** Textilstofflaminat, umfassend
eine Schicht, umfassend mindestens ein sulfoniertes aromatisches Polymer, umfassend Wiederholungseinheiten, ausgewählt aus sulfoniertem Polysulfon, sulfoniertem Polyethersulfon, sulfoniertem Polyetherketon, sulfoniertem Biphenylsulfon, sulfoniertem Polyphthalazinonetherketon, sulfoniertem Polyphenylenoxid, sulfoniertem Polyimid und sulfoniertem Polybenzimidazol, und
mindestens eine Schicht von Bekleidungsstoff,
wobei die Schicht, umfassend das sulfonierte aromatische Polymer, ein Sulfonsäureäquivalentgewicht von 400-1000 (IEC: 1,0-2,5 mÄq/g) hat und wobei das sulfonierte aromatische Polymer und der Bekleidungsstoff ein Laminat bilden, das imstande ist, Wasserdampf hindurch zu lassen.

**36.** Textilstofflaminat nach Anspruch 35, wobei das sulfonierte aromatische Polymer ein Sulfonsäureäquivalentgewicht von 400-800 (IEC: 1,25-2,5 mÄq/g) hat.

**37.** Textilstofflaminat nach Anspruch 35, weiterhin umfassend mindestens eine zusätzliche Schicht von Bekleidungsstoff, ausgewählt aus gewebten oder nicht-gewebten Bekleidungsstoffen, umfassend Fasern von Polymeren, ausgewählt aus poly(aliphatischem Amid), poly(aromatischem Amid), Polyester, Polyolefin, Wolle, auf Cellulose basierender Faser, wie beispielsweise Baumwolle, Kunstseide, Leinen, Celluloseacetat und andere modifizierte Cellulose, Polyurethan, Acryl, Modacryl oder einem Gemisch von ihnen.

**38.** Textilstofflaminat nach Anspruch 35, wobei das Textilstofflaminat wasserdicht ist.

**39.** Textilstofflaminat nach Anspruch 35, wobei das Textilstofflaminat als ein Bekleidungsstück erzeugt wird.

**40.** Textilstofflaminat nach Anspruch 35, wobei das Textilstofflaminat ein Bekleidungsstück, ausgewählt aus Oberbekleidung, Unterwäsche, Jacken, Hosen, Handschuhen, Fußbekleidung und Hauben, ist.

**41.** Textilstofflaminat nach Anspruch 35, wobei das sulfonierte aromatische Polymer aromatische Gruppen aufweist, von welchen zumindest ein Anteil Substitutionen, ausgewählt aus $C_1$-$C_8$-Alkyl- und Halogenalkyl-, Aryl-, Keton-, Hydroxyl-, Halogen-, Amin-, Cyanid-, Nitril-, Sulfid-, Carbonyl-, $C_{1-8}$-Ester- und $C_1$-$C_8$-Alkoxylgruppen, enthält.

**42.** Textilstofflaminat nach Anspruch 35, wobei die Schicht, umfassend das sulfonierte aromatische Polymer, ein Verbundstoff, umfassend das sulfonierte aromatische Polymer und mindestens ein Substrat, ist.

**43.** Textilstofflaminat nach Anspruch 42, wobei mindestens ein Substrat expandiertes Polytetrafluorethylen ist.

**44.** Textilstofflaminat nach Anspruch 42, wobei zumindest ein Anteil des sulfonierten aromatischen Polymers sich innerhalb eines porösen oder mikroporösen Substrats befindet und das Substrat teilweise füllt.

**45.** Textilstofflaminat nach Anspruch 42, wobei zumindest ein Anteil des sulfonierten aromatischen Polymers sich innerhalb eines porösen oder mikroporösen Substrats befindet und das Substrat im Wesentlichen füllt.

**46.** Bekleidungsstück mit Textilstofflaminat, imstande, Feuchtigkeitsdampf hindurch zu lassen, umfassend
mindestens eine Schicht von Bekleidungsstoff, laminiert auf
einen Verbundstoff, umfassend mindestens ein Substrat und ein sulfoniertes aromatisches Polymer, wobei das sulfonierte aromatische Polymer mindestens eine sich wiederholende aromatische Gruppe, ausgewählt aus 5-, 6- oder 7-gliedrigen einzelnen oder kondensierten Ringen mit 0, 1, 2, 3 oder 4 Heteroatomen, ausgewählt aus N, O oder S, umfasst und wobei zumindest ein Anteil der aromatischen Gruppen mindestens eine anhängende Gruppe, umfassend Sulfonsäure oder ihr Salz, aufweist, wobei das Polymer ein Sulfonsäureäquivalentgewicht von 400-1000 (IEC: 1,0-2,5 mÄq/g) hat.

**47.** Bekleidungsstück nach Anspruch 46, wobei das sulfonierte aromatische Polymer Wiederholungseinheiten, ausgewählt aus sulfoniertem Polysulfon, sulfoniertem Polyethersulfon, sulfoniertem Polyetherketon, sulfoniertem Biphenylsulfon, sulfoniertem Polyphthalazinonetherketon, sulfoniertem Polyphenylenoxid, sulfoniertem Polyimid und sulfoniertem Polybenzimidazol, umfasst.

**48.** Bekleidungsstück nach Anspruch 46, wobei das Textilstofflaminat eine Feuchtigkeitsdampfdurchlässigkeitsrate von mindestens 600 $g/m^2$/Tag hat.

**49.** Bekleidungsstück nach Anspruch 46, wobei mindestens ein Substrat expandiertes Polytetrafluorethylen ist.

**50.** Bekleidungsstück nach Anspruch 46, umfassend mindestens zwei Schichten von Bekleidungsstoff.

**51.** Bekleidungsstück nach Anspruch 46, wobei die mindestens eine Schicht von Bekleidungsstoff aus Baumwolle, poly (aliphatischem Amid), poly(aromatischem Amid), Polyester, Polyurethan und Gemischen davon ausgewählt ist.

**Revendications**

**1.** Tissu laminé apte à transmettre la vapeur d'eau comprenant
au moins une couche de tissu d'habillement laminée sur
une couche comprenant au moins un polymère aromatique sulfoné, ce polymère aromatique sulfoné comprenant au moins un groupe aromatique répétitif choisi parmi les cycles à 5, 6, ou 7 chaînons, simples ou condensés, ayant 0, 1, 2, 3, ou 4 hétéroatomes choisis parmi N, O ou S, et au moins une partie des groupes aromatiques ayant au moins un groupe latéral comprenant de l'acide sulfonique, ou son sel, le polymère aromatique sulfoné ayant un poids équivalent d'acide sulfonique de 400-1000 (capacité d'échange ionique CEI: 1,0-2,5 méq./g).

**2.** Tissu laminé selon la revendication 1, dans lequel ladite au moins une couche de tissu d'habillement est choisie

parmi les tissus d'habillement tricotés, tissés ou non tissés.

**3.** Tissu laminé selon la revendication 1, dans lequel ladite au moins une couche de tissu d'habillement comprend des fibres synthétiques ou naturelles de polymères choisis parmi les poly(amide aliphatique), poly(amide aromatique), polyester, polyoléfine, laine, fibre à base de cellulose telle que le coton, la rayonne, le lin, l'acétate de cellulose et autre cellulose modifiée, polyuréthane, acrylique, modacrylique, et mélange de ceux-ci.

**4.** Tissu laminé selon la revendication 1, comprenant au moins deux couches de tissu d'habillement.

**5.** Tissu laminé selon la revendication 1, dans lequel le polymère aromatique sulfoné a un poids équivalent d'acide sulfonique de 400-800 (CEI: 1,25-2,5 méq./g).

**6.** Tissu laminé selon la revendication 1, dans lequel au moins une partie des groupes aromatiques ont des substitutions choisies parmi les groupes halogénoalkyle et alkyle en $C_{1-8}$, aryle, cétone, hydroxyle, halogène, amine, cyanure, nitrile, sulfure, carbonyle, ester en $C_{1-8}$ et alcoxyle en $C_{1-8}$.

**7.** Tissu laminé selon la revendication 1, dans lequel au moins une partie des groupes aromatiques sont liés par une ou plusieurs liaisons comprenant des groupes cétone, sulfone, éther, sulfure, amide, imide, uréthane, ester, alkylène en $C_{1-5}$ saturé ou insaturé substitué ou non substitué, phosphine substituée ou non substituée, et oxyde de phosphine.

**8.** Tissu laminé selon la revendication 1, dans lequel le polymère aromatique sulfoné possède une ou plusieurs liaisons choisies parmi les cétone, sulfone, imide et éther.

**9.** Tissu laminé selon la revendication 1, dans lequel le polymère aromatique sulfoné est réticulé.

**10.** Tissu laminé selon la revendication 1, dans lequel le polymère aromatique sulfoné est ioniquement réticulé.

**11.** Tissu laminé selon la revendication 1, dans lequel la couche comprenant le polymère aromatique sulfoné comprend en outre au moins un constituant supplémentaire.

**12.** Tissu laminé selon la revendication 1, dans lequel la couche comprenant le polymère aromatique sulfoné comprend un composite du polymère aromatique sulfoné et d'au moins un substrat.

**13.** Tissu laminé selon la revendication 12, dans lequel le polymère aromatique sulfoné réside partiellement ou entièrement dans ledit au moins un substrat.

**14.** Tissu laminé selon la revendication 1, dans lequel le tissu laminé est étanche à l'eau.

**15.** Tissu laminé selon la revendication 1, dans lequel le tissu laminé est façonné en article d'habillement ou d'abri.

**16.** Tissu laminé selon la revendication 1, dans lequel le tissu laminé est un article d'habillement choisi parmi les vêtements d'extérieur, les sous-vêtements, les vestes, les pantalons, les gants, les cagoules, et les chaussures.

**17.** Tissu laminé selon la revendication 1, dans lequel le taux de transmission de la vapeur d'eau est d'au moins 600 $g/m^2$/jour.

**18.** Tissu laminé apte à transmettre la vapeur d'eau comprenant
au moins une couche de tissu d'habillement laminée sur
un composite comprenant au moins un substrat et un polymère aromatique sulfoné, ce polymère aromatique sulfoné comprenant
au moins un groupe aromatique répétitif choisi parmi les cycles à 5, 6, ou 7 chaînons, simples ou condensés, ayant 0, 1, 2, 3, ou 4 hétéroatomes choisis parmi N, O ou S, et au moins une partie des groupes aromatiques ayant au moins un groupe latéral comprenant de l'acide sulfonique, ou son sel, le polymère aromatique sulfoné ayant un poids équivalent d'acide sulfonique de 400-1000 (capacité d'échange ionique CEI: 1,0-2,5 méq./g).

**19.** Tissu laminé selon la revendication 18 dans lequel ladite au moins une partie des groupes aromatiques sont liés par une ou plusieurs liaisons comprenant des groupes cétone, sulfone, éther, sulfure, amide, imide, uréthane, ester, alkylène en $C_{1-5}$ saturé ou insaturé substitué ou non substitué, phosphine substituée ou non substituée, et oxyde

de phosphine.

**20.** Tissu laminé selon la revendication 18 dans lequel au moins une partie des groupes aromatiques sont liés par des liaisons choisies parmi les cétone, sulfone, imide et éther.

**21.** Tissu laminé selon la revendication 18 dans lequel le polymère aromatique sulfoné a un poids équivalent d'acide sulfonique de 400-800 (CEI: 1,25-2,5 méq./g).

**22.** Tissu laminé selon la revendication 18 dans lequel au moins une partie des groupes aromatiques contiennent des substitutions choisies parmi les groupes halogénoalkyle et alkyle en $C_{1-8}$, aryle, cétone, hydroxyle, halogène, amine, cyanure, nitrile, sulfure, carbonyle, ester en $C_{1-8}$ et alcoxyle en $C_{1-8}$.

**23.** Tissu laminé selon la revendication 18 dans lequel ladite au moins une couche de tissu d'habillement est choisie parmi les tissus d'habillement tricotés, tissés ou non tissés, comprenant des fibres de polymères choisis parmi les poly(amide aliphatique), poly(amide aromatique), polyester, polyoléfine, laine, fibre à base de cellulose telle que le coton, la rayonne, le lin, l'acétate de cellulose et autre cellulose modifiée, polyuréthane, acrylique, modacrylique, et mélange de ceux-ci.

**24.** Tissu laminé selon la revendication 18, dans lequel ledit au moins un substrat est poreux ou microporeux.

**25.** Tissu laminé selon la revendication 18, dans lequel ledit au moins un substrat est du polytétrafluoroéthylène expansé.

**26.** Tissu laminé selon la revendication 24 dans lequel au moins une partie du polymère aromatique sulfoné réside à l'intérieur d'un substrat poreux ou microporeux et remplit partiellement le substrat.

**27.** Tissu laminé selon la revendication 24, dans lequel au moins une partie du polymère aromatique sulfoné réside à l'intérieur d'un substrat poreux ou microporeux et remplit substantiellement le substrat.

**28.** Tissu laminé selon la revendication 24, dans lequel au moins une partie du polymère aromatique sulfoné réside à l'intérieur d'un substrat polytétrafluoroéthylène expansé et remplit partiellement ou substantiellement le substrat.

**29.** Tissu laminé selon la revendication 28, comprenant en outre au moins deux substrats supplémentaires, dans lequel au moins un substrat supplémentaire est du polytétrafluoroéthylène expansé et au moins un autre substrat est non poreux.

**30.** Tissu laminé selon la revendication 28, comprenant en outre au moins un substrat polytétrafluoroéthylène expansé supplémentaire et dans lequel au moins une partie du polymère aromatique sulfoné réside partiellement ou entièrement à l'intérieur des deux substrats polytétrafluoroéthylènes expansés.

**31.** Tissu laminé selon la revendication 28 comprenant en outre au moins un substrat polyuréthane non poreux supplémentaire.

**32.** Tissu laminé selon la revendication 18 dans lequel le tissu laminé est étanche à l'eau.

**33.** Tissu laminé selon la revendication 18 dans lequel le tissu laminé est façonné en article d'habillement ou d'abri.

**34.** Tissu laminé selon la revendication 18, dans lequel le tissu laminé est un article d'habillement choisi parmi les vêtements d'extérieur, les sous-vêtements, les vestes, les pantalons, les gants, les chaussures, et les cagoules.

**35.** Tissu laminé comprenant
une couche comprenant au moins un polymère aromatique sulfoné comprenant des motifs répétitifs choisis parmi une polysulfone sulfonée, une polyéther-sulfone sulfonée, une polyéther-cétone sulfonée, une biphénylsulfone sulfonée, une polyphtalazinone-éther-cétone sulfonée, un poly(oxyde de phénylène) sulfoné, un polyimide sulfoné, et un polybenzimidazole sulfoné et
au moins une couche de tissu d'habillement,
dans lequel la couche comprenant le polymère aromatique sulfoné a un poids équivalent d'acide sulfonique de 400-1000 (capacité d'échange ionique CEI: 1,0-2,5 méq./g), et dans lequel le polymère aromatique sulfoné et le tissu d'habillement forment un laminé qui est apte à transmettre la vapeur d'eau.

**36.** Tissu laminé selon la revendication 35, dans lequel le polymère aromatique sulfoné a un poids équivalent d'acide sulfonique de 400-800 (CEI: 1,25-2,5 méq./g).

**37.** Tissu laminé selon la revendication 35, comprenant en outre au moins une couche supplémentaire de tissu d'habillement choisi parmi les tissus d'habillement tissés ou non tissés comprenant des fibres de polymères choisis parmi les poly(amide aliphatique), poly(amide aromatique), polyester, polyoléfine, laine, fibre à base de cellulose telle que le coton, la rayonne, le lin, l'acétate de cellulose et autre cellulose modifiée, polyuréthane, acrylique, modacrylique, et mélange de ceux-ci.

**38.** Tissu laminé selon la revendication 35, dans lequel le tissu laminé est étanche à l'eau.

**39.** Tissu laminé selon la revendication 35 dans lequel le tissu laminé est façonné en article d'habillement.

**40.** Tissu laminé selon la revendication 35, dans lequel le tissu laminé est un article d'habillement choisi parmi les vêtements d'extérieur, les sous-vêtements, les vestes, les pantalons, les gants, les chaussures, et les cagoules.

**41.** Tissu laminé selon la revendication 35 dans lequel le polymère aromatique sulfoné possède des groupes aromatiques dont au moins une partie contiennent des substitutions choisies parmi les groupes halogénoalkyle et alkyle en $C_{1-8}$, aryle, cétone, hydroxyle, halogène, amine, cyanure, nitrile, sulfure, carbonyle, ester en $C_{1-8}$ et alcoxyle en $C_{1-8}$.

**42.** Tissu laminé selon la revendication 35, dans lequel la couche comprenant le polymère aromatique sulfoné est un composite comprenant le polymère aromatique sulfoné et au moins un substrat.

**43.** Tissu laminé selon la revendication 42, dans lequel au moins un substrat est du polytétrafluoroéthylène expansé.

**44.** Tissu laminé selon la revendication 42, dans lequel au moins une partie du polymère aromatique sulfoné réside à l'intérieur d'un substrat poreux ou microporeux et remplit partiellement le substrat.

**45.** Tissu laminé selon la revendication 42, dans lequel au moins une partie du polymère aromatique sulfoné réside à l'intérieur d'un substrat poreux ou microporeux et remplit substantiellement le substrat.

**46.** Article d'habillement ayant un tissu laminé apte à transmettre la vapeur d'eau comprenant
au moins une couche de tissu d'habillement laminée sur
un composite comprenant au moins un substrat et un polymère aromatique sulfoné, ce polymère aromatique sulfoné comprenant au moins un groupe aromatique répétitif choisi parmi les cycles à 5, 6, ou 7 chaînons, simples ou condensés, ayant 0, 1, 2, 3, ou 4 hétéroatomes choisis parmi N, O ou S, et au moins une partie des groupes aromatiques ayant au moins un groupe latéral comprenant de l'acide sulfonique, ou son sel, le polymère aromatique sulfoné ayant un poids équivalent d'acide sulfonique de 400-1000 (capacité d'échange ionique CEI: 1,0-2,5 méq./g).

**47.** Article d'habillement selon la revendication 46, dans lequel le polymère aromatique sulfoné comprend des motifs répétitifs choisis parmi une polysulfone sulfonée, une polyéther-sulfone sulfonée, une polyéther-cétone sulfonée, une biphénylsulfone sulfonée, une polyphtalazinone-éther-cétone sulfonée, un poly(oxyde de phénylène) sulfoné, un polyimide sulfoné, et un polybenzimidazole sulfoné.

**48.** Article d'habillement selon la revendication 46, dans lequel le tissu laminé a un taux de transmission de la vapeur d'eau d'au moins 600 $g/m^2$/jour.

**49.** Article d'habillement selon la revendication 46, dans lequel au moins un substrat est du polytétrafluoroéthylène expansé.

**50.** Article d'habillement selon la revendication 46, comprenant au moins deux couches de tissu d'habillement.

**51.** Article d'habillement selon la revendication 46, dans lequel ladite au moins une couche de tissu d'habillement est choisie parmi le coton, le poly(amide aliphatique), le poly(amide aromatique), le polyester, le polyuréthane, et les mélanges de ceux-ci.

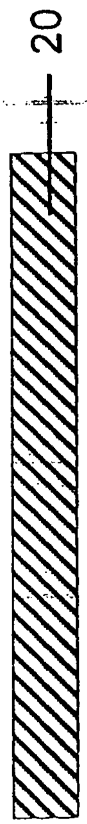


Fig 1.

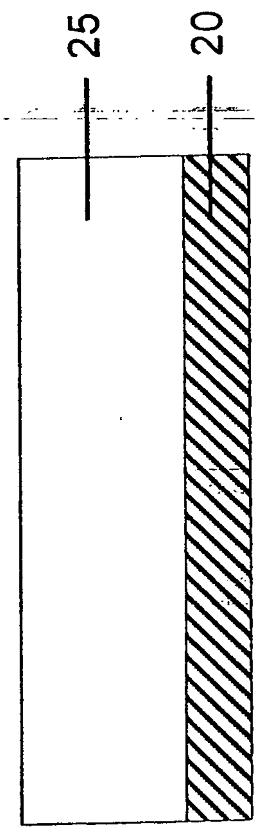


Fig 2.

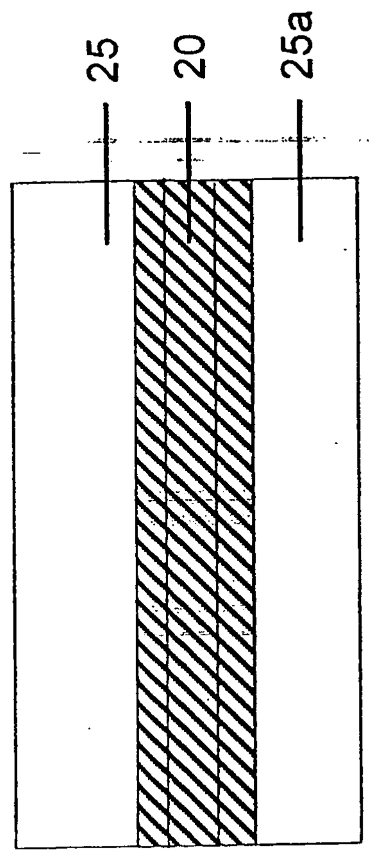


Fig 3.

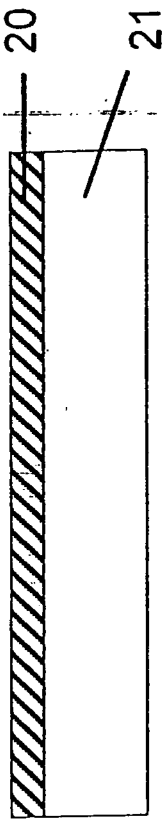


Fig 4.

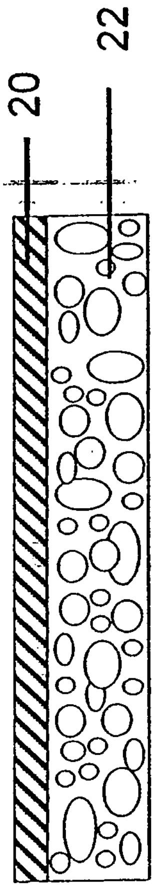


Fig 5.

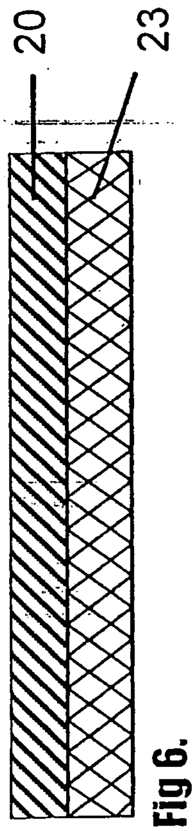


Fig 6.

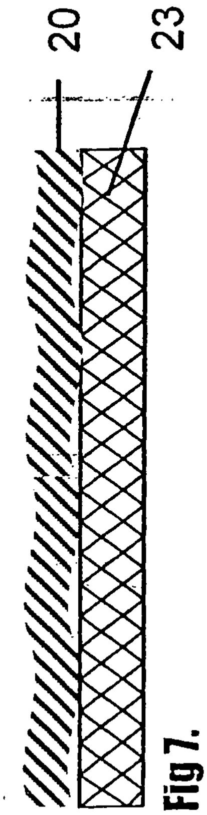


Fig 7.

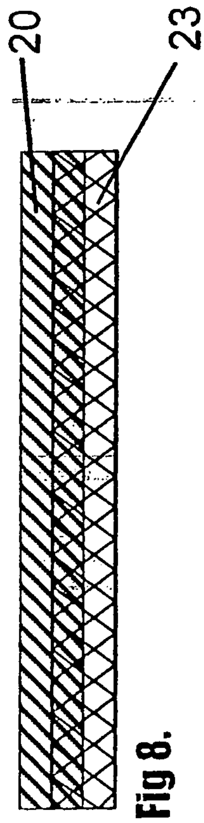


Fig 8.

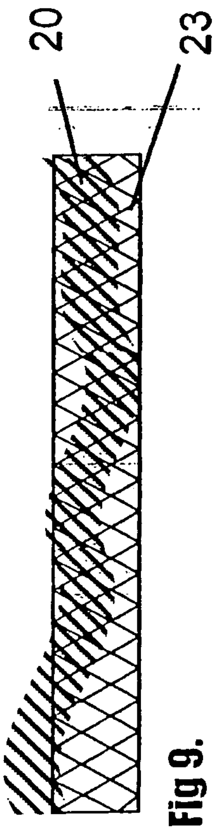


Fig 9.

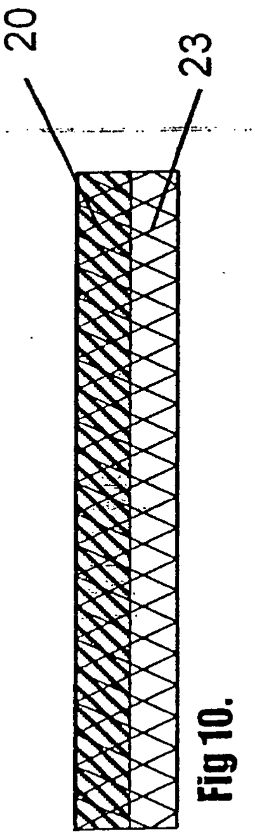


Fig 10.

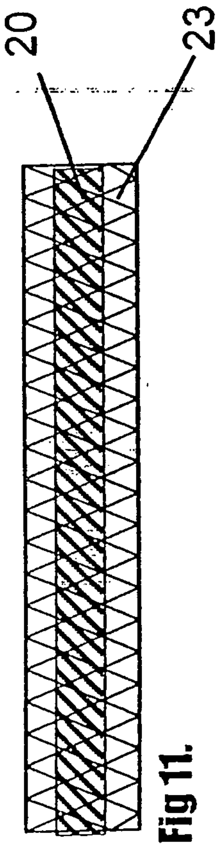


Fig 11.

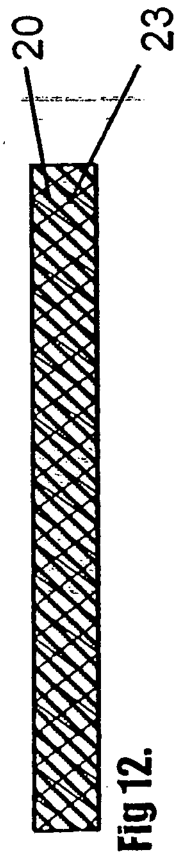


Fig 12.

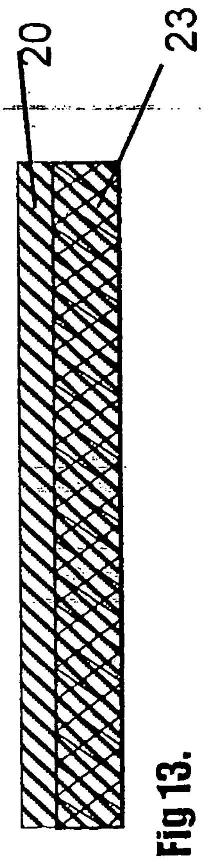


Fig 13.

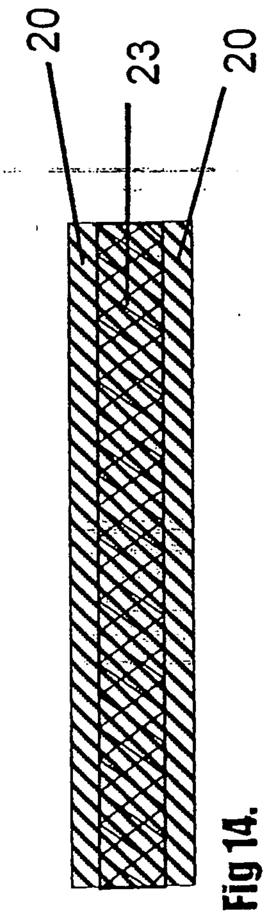


Fig 14.

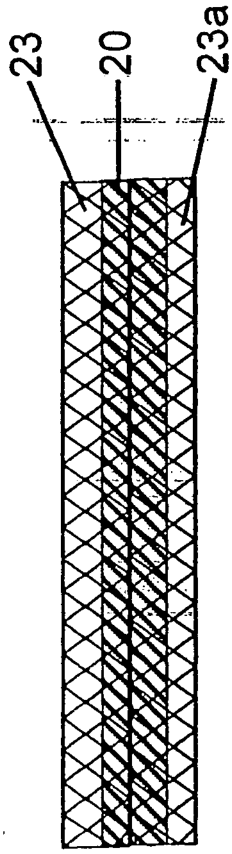


Fig 15.

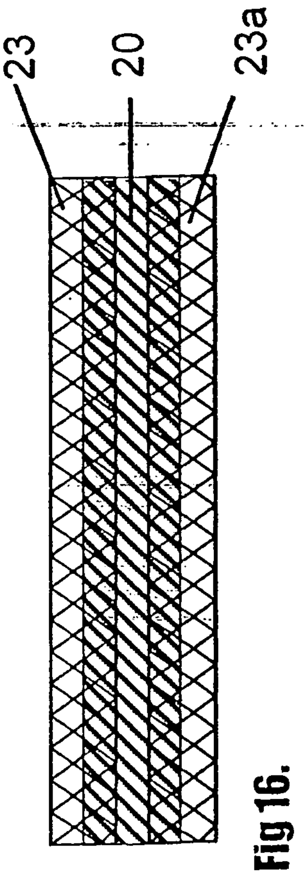


Fig 16.

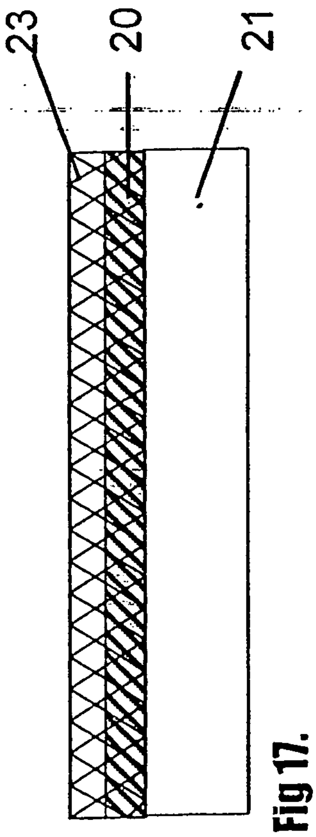


Fig 17.

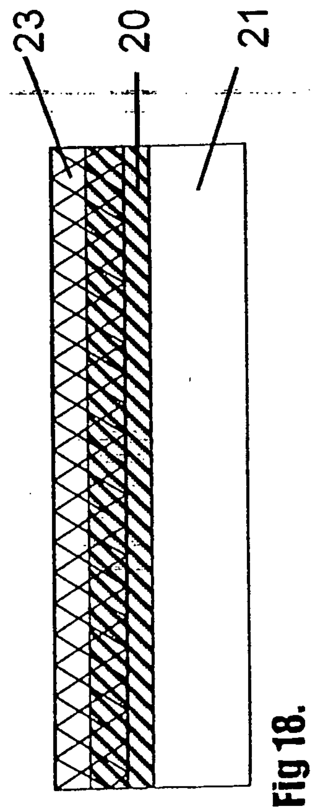


Fig 18.

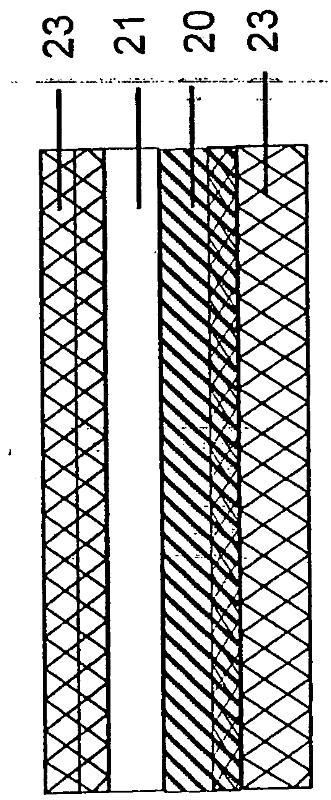


Fig 19.

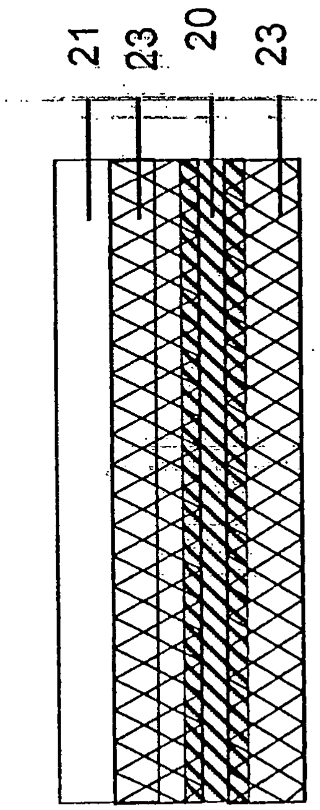


Fig 20.

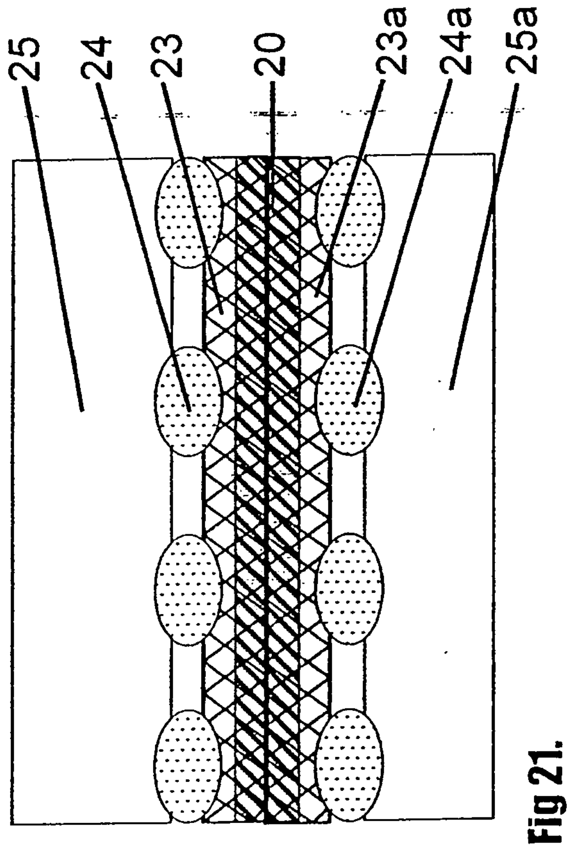


Fig 21.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4194041 A, Gore
- US 4515761 A
- US 4518650 A
- US 5013765 A
- US 5362836 A
- US 5403675 A
- US 6509441 A
- WO 0119896 A1
- US 4824916 A
- US 6451921 B
- US 4862730 A
- WO 0225764 A1
- WO 03005474 A2
- US 3953566 A
- US 6118218 A

### Non-patent literature cited in the description

- Encyclopedia of Polymer Science and Engineering. John Wiley and Sons
- Modern Plastics Encyclopedia. McGraw Hill
- **CRITCHLEY et al.** Heat Resistant Polymers - Technologically Useful Materials. Plenum Press, 1983
- **KOMKOVA et al.** Influence Of The Nature Of Polymer Matrix And The Degree Of Sulfonation On The Properties Of Membranes. *Polymer Science,* 2001, vol. 43 (3), 300-307
- **KOMKOVA et al.** Influence of the nature of polymer matrix and the degree of sulfonation on the properties of membranes. *Polymer Science,* 2001, vol. 43 (3), 300-307